# EUROPEAN PATENT SPECIFICATION

(11) **EP 2 138 548 B1**
(45) Date of publication and mention of the grant of the patent: **30.03.2011**
(21) Application number: 08158747.9
(22) Date of filing: 23.06.2008
(51) Int. Cl.: C09J 131/04

(54) **Heat resistant emulsion polymer dispersion**
Hitzebeständige Emulsionspolymerdispersion
Dispersion de polymère à émulsion thermorésistante

(43) Date of publication of application: 30.12.2009
(73) Proprietor: Wacker Chemie AG, 81737 München (DE)
(72) Inventor: Zecha, Helmut, 84489, Burghausen (DE)
(74) Representative: Schwabe - Sandmair - Marx

(56) References cited:
- EP-A- 0 547 507
- EP-A- 1 493 793

## Description

### Field of the Invention

This invention relates to aqueous polymer dispersions obtainable by emulsion polymerization of vinyl ester based copolymer particles and (meth)acrylic acid amide(s) and N-alkylol acrylamide as further comonomer(s), stabilized in the presence of fully hydrolyzed polyvinyl alcohol. The aqueous polymer dispersions of the invention provide improved heat resistance and water resistance of material bonds made with adhesive formulations comprising such aqueous polymer dispersions. This invention further allows for a reduced amount of formaldehyde in adhesive formulation incorporating said aqueous polymer dispersion, and relates to the use of said adhesive formulation for binders, especially for wood adhesives or wood glues and for paper and packaging adhesives. Especially this invention provides water resistant and heat resistant wood glues. This invention additionally relates to a process of emulsion polymerization to obtain the aqueous polymer dispersion of the invention.

### Background of the Invention

There are different ways of stabilizing dispersions, obtained by emulsion polymerization to prevent coagulation of the polymer particles: conventionally, this is achieved by the use of ionic or nonionic surfactants or by the use of charged initiators, resulting in electrostatic repulsion of the respective particles. EP 0 547 507 A1 describes aqueous adhesive dispersions on the basis of vinylester/acrylic ester copolymerisation to provide adhesion with improved heat resistant. The vinylester/acrylic ester popolymerisate comprises methyacrylic ester comonomer units. D1 discloses the preparation of a mixed polymerisate in the presence of anionic emulsifiers. Another way of stabilizing aqueous polymer dispersions is the use of protective colloids. Especially the use of polyvinyl alcohol (PVOH) has attracted some attention in the recent past and which traditionally strictly separates between the use of fully hydrolyzed PVOH, and partially hydrolyzed PVOH, due to differing requirements and performance.

A vinyl ester based emulsion polymer, especially such based on vinyl acetate (VAC), obtained by free radical polymerization in aqueous phase in the presence of standard polyvinyl alcohol (S-PVOH) has been described some time ago, e.g. in DE 727 955. The use of such polyvinyl acetate emulsion in adhesives is reviewed e.g. by H.L. Jaffe, F. M. Rosenblum and W. Daniels in Handbook of Adhesives, ISBN 0-442-28013-0, ed. by Irving Skeist, Van Nostrand Reinhold, New York, 1990, p. 381 - 407 (Reference [1]). Several advantages of the use of polyvinyl alcohol particle protection are reported, such as good machinability, easy clean up, good wet tack, rapid setting speed, rapid thickening response, good heat resistance, low degree of blocking, and crosslinkability. Additional advantages are mentioned such as good (thixotropic) flow behavior, non-slinging, non-spitting or non-throwing behavior on machine, better water resistance than surfactant stabilized VAC emulsion polymer films, good adhesion to cellulosic substrates such as wood or paper, good open time of the adhesive film. Further, polyvinyl alcohol improves cohesive strength of a polymer film and creep resistance of a bond.

A trade-off conventionally associated with the advantages of polyvinyl alcohol in wood adhesives is water sensitivity of polymer films and of the adhesive wood bond. This appears to be due to the fact that polyvinyl alcohol itself is a water soluble polymer.

For wood adhesives the cohesion strength of the dry bond, in particular under ambient temperature, is of paramount importance. In addition, there are further demands for high quality wood adhesives, among which the water resistance of the bond, as well as its heat and creep resistance play a significant role. Therefore, standard test procedures exist for water resistance (DIN EN 204/205), for heat resistance or WATT (DIN EN 14257) and for creep resistance (B.S. 3544).

Further requirements for wood adhesives are related to their rheological properties, such as viscosity and its shear rate dependence, their shelf life or stability, including their colloidal stability in general and their viscosity stability in particular. Additionally, the adhesive shall provide a high setting speed of wood bond on the one hand, and on the other hand it shall provide a sufficient long open time.

With respect to aqueous wood adhesives it is known from the prior art (US 3,301,809, US 3,563,851, DE 2 620 738, EP 433 957, DE 196 49 419, EP 1 505 085, EP 1 304 339) that water resistant glues fulfilling demands of water resistance class D3 according to DIN EN 204/205 are aqueous copolymers of preferably vinyl acetate (VAC) and N-methylol acrylamide (NMA), prepared in the presence of polyvinyl alcohol (PVOH). These copolymers are formulated with an acidic or Lewis-acidic catalyst, such as metal salts, e.g. aluminum chloride, whereby these so called catalysts act as well as a complexing agent for the PVOH (EP 1 240 268 B1) and additionally as acidic catalyst of a post-crosslinking of the NMA functionality. Various commercial products following such composition strategy are available, providing D3 type water resistance. Such wood adhesives may provide D3 type water resistance and sufficient heat resistance or WATT of the bond in terms of WATT 91 according to DIN EN 14257 of at least 6 N/mm². An example of such commercial products is, e.g. VINAC® DPN 15. Such products have the disadvantage, that their viscosity stability is deficient after storage well above ambient temperature, e.g. at 50 °C. Due to start of the crosslinking reaction of N-methylol groups, their viscosity may increase dramatically and irreversibly as shown in DE 103 35 673 B4. DE 103 35 673 B4 therefore tries to reduce the amount of the NMA content and compensates for decreasing water resistance by the addition of e.g. cyclic ethyleneureas.

Certain applications require a much higher water resistance than D3 quality and therefore there is an increasing demand for D4 water resistant wood adhesives which keep further advantages of known D3 aqueous adhesives. Among those advantages are long term shelf stability and heat resistance.

### Degree of hydrolysis of PVOH used in polymerization

The term S-PVOH as used here defines an unmodified or standard polyvinyl alcohol obtained by hydrolysis or saponification of vinyl acetate homopolymer, as described e.g. by F. L. Marten and C. W. Zvanut in "Polyvinyl Alcohol - Developments", C.A. Finch (Ed.), Wiley, Chichester, 1992 (Reference [2]). Initiator end groups resulting from the used radical forming compounds in earlier vinyl acetate polymerization are mostly neglected if they do not include special functionality.
The term X-PVOH as used here defines a polyvinyl alcohol obtained by hydrolysis of a vinyl acetate copolymer including at least one comonomer X or special functional compounds X such as functional radical forming compounds or initiators or chain transfer compounds. Examples for the comonomers X have been given e.g. by T. Okaya in Reference [2], p. 77 -103, or by M. Maruhashi in Reference [2], p. 157 - 194. Examples for special functional compounds X have been described by T. Okaya and T. Sato in Reference [2], p. 105 -156. Reference is made also to D. B. Farmer in Reference [2], p. 433 - 468.

Among the X-PVOH compounds, modified polyvinyl alcohols containing ethylene units of less than about 15 mol% enjoy growing interest in vinyl ester emulsion polymerization, as described in JP 911002. X-PVOH, that has been exclusively or inter alia modified by ethylene units within the polymer chain is referred to as E-PVOH in the sense of the present invention. Another interesting group of modified polyvinyl alcohol is such PVOH containing acetoacetyl groups which is referred to as A-PVOH. The term PVOH includes both S-PVOH and X-PVOH, which in turn includes E-PVOH or A-PVOH.

PVOH compounds differ in molecular weight or molecular weight distribution, in degree of hydrolysis or in hydrolysis distribution, or in other words in residual content of acetyl groups, and in sequence-length distribution or "blockiness" of residual acetyl groups and, in the case of X-PVOH also in amount and sequence-length distribution of the modifying X-group.

Partially hydrolyzed (85 to 92 mol%, in particular 87 - 89 mol%) PVOH grades are commonly used as a protective colloid in the industrial emulsion polymerization of vinyl esters, especially of VAC, whereas fully hydrolyzed PVOH grades are normally not used during industrial emulsion polymerization. Rather, they may be added after the polymerization is complete to increase the water resistance of the latex films; compare e.g. H. Y. Erbil in "Vinyl Acetate Emulsion Polymerization and Copolymerization with Acrylic Monomers", CRC Press, Boca Raton, London, New York, Washington D.C., 2000, (Reference [3]), p. 150 - 154. Also according to Reference [3], p. 84 - 86, partially hydrolyzed PVOH grades comprising about 12 mol% acetate groups are preferred in emulsion polymerization because of their better balance of hydrophilic and hydrophobic properties. According to US 3,827,996 the use of PVOH with an average residual acetate content of less than 3 mol%, i.e. with a degree of hydrolysis above 97 mol%, results in dispersions with deficient stability. Also, according to US 5,434,216 it is generally agreed that with increasing degree of hydrolysis of the polyvinyl alcohol above 88%, its ability to perform as an effective protective colloid decreases. US 5,434,216 therefore relies on the use of a blend of fully hydrolyzed S-PVOH having a degree of hydrolysis of 95 to 99.5% and a partially hydrolyzed S-PVOH being 88% hydrolyzed. GB 1 228 380, EP 0 851 015 B1, DE 199 41 904 A1 and US 3,925,289 as examples for a multitude of comparable patents disclose that fully or nearly fully hydrolyzed PVOH can be used as a post polymerization addition ingredient, in aqueous vinyl acetate emulsions. None of these products, however, fulfills the advanced D4 requirements (DIN EN 204/205) of water resistance under standard gluing conditions.

Water sensitivity of a polymer film and colloid stabilizing property are accepted to be competing issues, the latter property being particularly poor in emulsion polymerization using conventional fully hydrolyzed PVOH grades (see e.g. Reference [1]).

As an example, 98.8 mol% hydrolyzed PVOH was used in an amount of 5 wt.% based on total poly vinyl acetate emulsion of 50 wt.% solids, and hydrogen peroxide was used as an initiator in the presence of tartaric acid. This product is not suitable as wood adhesive in terms of sufficient bond strength. Furthermore, such product reveals poor heat resistance and stability (Hayashi, Polym. Plast. Technol. Eng., 27(1998), 61).

Noro (Br. Polymer Journal 2(1970)128; quoted in [3], p. 283) reports that when fully hydrolyzed PVOH was used as a protective colloid in VAC polymerization in order to improve water resistance, the storage stability was poor.

Several scientific studies comparing grafting of the VAC monomer onto partially hydrolyzed PVOH and onto fully hydrolyzed PVOH have been reported. Methods used to identify "grafting" are as different as the reported results, compare e.g. Farmer in [2]. None of the disclosed recipes so far, however, including only fully hydrolyzed PVOH, is suitable as a wood adhesive.

DE 2 139 262 discloses a process to prepare stable latexes of copolymers of VAC and NMA, containing a fully hydrolyzed PVOH and a surfactant. The PVOH has a degree of hydrolysis of at least 91%. US 3,730,933 discloses a process of emulsion polymerization of VAC/NMA, using 0.5 to 7 parts of NMA to improve stability and water resistance. Apart from fully hydrolyzed PVOH, no surfactant is needed but can be used as additional stabilizing agent. The PVOH used has a degree of hydrolysis of at least about 93%. Obtained products are used for bonding wood. The achieved water resistance, however, does not meet the D4 quality. Additionally, the products suffer from low shelf life, i.e. the viscosity of the adhesive doubles within few days. Furthermore, low temperature viscosity stability remains to be improved due to a tendency to gel. Heat resistance property is not considered.

US 5,434,216 discloses a water resistant emulsion for woodworking adhesive based on a VAC/NMA polymer, prepared in the presence of a blend of 88% hydrolyzed and 95-99.5%, or above, hydrolyzed PVOH. The product shows improved water resistance of the wood bond when formulated with a phenolic resin and acidic aluminum chloride.

WO 94/22671 discloses a surfactant free, formaldehyde-free PVOH graft copolymer binder emulsion for nonwoven products comprising 12 to 35 wt.% of PVOH based on weight of solids, wherein at least 75% of the PVOH is at least 98% hydrolyzed and about 65 to 88% of a vinyl and/or an acrylic monomer by weight of solids, which is graft copolymerized with the PVOH through emulsion polymerization. No specific combination of a vinyl ester and an acrylic acid amide is disclosed. Again, such product does not provide sufficient water resistance.

US 4,521,561 describes the emulsion polymerization of VAC/ethylene (VAC/E) in the presence of both partially and fully hydrolyzed PVOH. The resulting latex provides enhanced plasticizer thickening when blended with a partially- or fully-hydrolyzed PVOH after polymerization.

US 5,633,334 also discloses VAC or VAC/E emulsion polymerization using a blend of a 80% hydrolyzed, a 88% hydrolyzed and a 96% hydrolyzed PVOH grade providing a product compatible with a post polymerization added fully hydrolyzed PVOH.

EP 0 484 822 B1 is directed to VAC/E emulsion polymerization using a PVOH blend consisting of a low molecular weight, partially hydrolyzed PVOH; a medium molecular weight, partially hydrolyzed PVOH; and a medium molecular weight, or high molecular weight, fully hydrolyzed PVOH, or mixtures thereof. The product provided both high wet tack and improved tack range properties.

US 4,043,961 teaches the need for employing a surfactant for emulsion polymerization of VAC/E in order to obtain good emulsion stability in the event that fully hydrolyzed PVOH is used as the only PVOH. The total PVOH used contains at least 20 wt.% of a special modified X-PVOH containing from about 1 to 10 wt.% of methyl methacrylate.

JP 2002265506 A discloses a process of a two stage emulsion polymerization of VAC where within a first stage 5-20 wt.% based on total monomer of a PVOH having a degree of saponification of at least 95 mol% is used, and in the second stage 10 - 50 wt.% based on total monomer of a PVOH having a degree of saponification of less than 95 mol% is applied. The resulting product is superior in aqueous dilution property, avoiding particle settlement. The total amount of PVOH used is 15-50 wt.%, preferably 20 to 45 wt.%, based on total monomer.

No binder dispersions are presently commercially available that exclusively employ fully hydrolyzed PVOH due to the associated problems with stability of the polymer particles or lack of colloidal stability and viscosity stability.

### Modified PVOH (X-PVOH; E-PVOH)

The use of fully hydrolyzed PVOH in emulsion polymerization of acrylic or styrene/acrylic systems as described in US 2005/0197441 refers to a fully hydrolyzed X-PVOH; EP 0 812 863 discloses the limits of using PVOH as a stabilizer in acrylic systems and specifically discloses the use of a combination of fully and partially hydrolyzed S-PVOH in the presence of a chain transfer agent for acrylic emulsion polymerization.

Recently the use of E-PVOH, such polyvinyl alcohol having ethylene units in an amount of mainly less than 15 mol% in the chain, has received growing interest in emulsion polymerization of vinyl esters, often such E-PVOH grades are nearly fully or fully hydrolyzed.

The use of E-PVOH (degree of hydrolysis > 95 mol% up to > 99 mol%), as dispersant in emulsion polymerization of vinyl ester monomers, preferred VAC, was disclosed e.g. in US 6,451,898, EP 0 692 494 B1, JP 2001172591 A; JP 3563189 B2; JP 1998226774 A; JP 2001106855; JP 20044002888; KR 1020020022592 A; JP 10226774 A; JP 09227748 A; JP 2002241411; US 6,780,931 B2; and JP 2001261913. These documents teach improvement of water resistance - estimated in different ways - when compared with standard polyvinyl alcohol (S-PVOH), especially when comparison is made with partially hydrolyzed S-PVOH, and improved viscosity stability of the obtained aqueous dispersion products.

All of these references report the polymerization of vinyl acetate, and although in general terms the option of a comonomer is mentioned in some of the references, there is no disclosure of a specific comonomer. Furthermore, none of these references mentions or meets the requirements of heat resistance quality for bonded wood. In contrast, it is shown that such products provide poor heat resistance in terms of WATT 91. None of the dispersions disclosed in the references mentioned above, comprising fully hydrolyzed E-PVOH, provides improved water resistance meeting D4 requirements when used in an adhesive formulation.

According to US 6,451,898 B1 aqueous dispersions containing fully hydrolyzed PVOH have relatively good water resistance and fluidity at high speed coating, but they are problematic in that their viscosity greatly increases and they therefore soon gel when left at low temperatures. On the other hand, an aqueous dispersion, containing partially hydrolyzed PVOH has improved properties in that its viscosity increase and gelling tendency at low temperatures is retarded, while water resistance is poor. No attempt has succeeded so far in realizing aqueous PVOH containing dispersions of good water resistance and good low temperature viscosity stability. Although E-PVOH has been proposed for use in aqueous emulsions, dispersions containing E-PVOH show only insufficient high temperature viscosity stability. This situation has been discussed also in US 5,599,870, JP 2001172591A, JP 2002241411, US 2002/0065361 A1.
The prior art thus teaches that if fully hydrolyzed S-PVOH is used as colloidal stabilizer in vinyl ester dispersions, such products will suffer from viscosity instability especially at low temperatures.

EP 1 493 793 B1 suggests an adhesive formulation based on an aqueous VAC emulsion polymer prepared in the presence of E-PVOH, and of a second post-polymerization added PVOH. The use of this second PVOH leads to an improvement of the rheological properties of the adhesive, providing a homogeneous adhesive film and an adhesive without tendency of coagulum formation. Adhesive formulations obtained according to EP 1 493 793 B1 provide no better water resistance than D3 (DIN EN 204/206). Furthermore, E-PVOH, used as the only protective colloid in emulsion polymerization of VAC (EP 1 493 793 B1) resulted in dispersions showing bad flow behavior and increased amounts of coagulum, which could not be sufficiently improved by the addition of additional surfactant.

JP 2001261912 describes an aqueous emulsion which comprises, as the dispersoid, a polymer having vinyl ester monomer units, and, as the dispersant, a composition comprising an E-PVOH having a degree of saponification of at least 95 mol% in combination with partially hydrolyzed S-PVOH in order to solve the viscosity problem.

JP 2001261912 and EP 1 493 793 B1 are silent regarding several important properties of a wood glue such as regarding setting speed or heat resistance of the bond. Heat resistance in terms of WATT 91 tested according to DIN EN 14257 results in bond strengths well below 4 N/mm². Well performing wood adhesives provide at least 5 N/mm² of WATT value, more desirable are at least 6N/mm².

In addition to a good water resistance there are many other objects which a high performance wood adhesive should fulfill. Among these objects the following properties are important: low coagulum or grit content; certain shear thinning behavior at the desired viscosity level excluding any shear thickening; sufficient storage stability in terms of colloidal stability and viscosity constancy; fast setting speed which is a high speed of bond strength formation, sufficient heat resistance of the bond, high creep resistance of the bond, sufficient hard wood adhesion, and low or no discoloration of the wood due to bonding.

### Acrylamide as comonomer

It is also well known that in vinyl ester emulsion polymerization, such as in VAC emulsion polymerization, various comonomers can be used. VAC/E copolymers have special industrial importance. These are of less relevance for wood glues (requiring high water resistance of D3 or D4 type and high heat resistance of WATT 91 > 5 N/mm²) but are widely used in paper and packaging adhesives.

Various comonomers are listed in JP 2001261912, US 6,451,898, JP 2001172591 A, JP 1998226774 A, JP 1998036801 A, JP 2002241411 A, and also in US 3,644,257.

Emulsion polymerization of VAC using acrylamide type comonomers has been described in GB 835,651, GB 1,092,030, US 3, 941,735, US 4,115,306, US 4,219,455, US 4,339,552, US 3,365,409, and in US 3,577,376.

GB 835,651, GB 1,092,030, US 3,365,409 and US 3,577,367 describe the copolymerization of vinyl acetate and acrylamide (VAC/AMD) in the presence of optionally a surfactant but without using any PVOH as protective colloid. As stated in US 4,219,455, these products are not suitable as wood adhesives.

US 4,339,552 describes the emulsion polymerization of vinyl ester, such as VAC, with ethylene in the presence of a hydroxy functional protective colloid, such as partially hydrolyzed PVOH, by the inclusion in the copolymer of an amide monomer, especially acryl amide (AMD) to provide a product with increased gel content, improved adhesion and in general terms, superior resistance to cold flow. US 4,339,552 is completely silent regarding heat resistance of a material bond. The described product additionally has an unfavorably low viscosity.

The use of acrylamide monomer is known to be advantageous with respect to increased rigidity and to provide opportunities for crosslinking (US 3,365,409), but on the other hand acrylamide may cause poor water resistance (GB 835,651).

JP 1998036801 A discloses a water based adhesive, constituted by an aqueous emulsion containing a copolymer of VAC and at least one monomer selected from (meth)acrylic acid, glycidyl (meth)acrylate, meth(acrylamide), N-methylol (meth)acrylamide, fumaric acid or its esters, maleic acid or its esters, and vinyl esters of tertiary carboxylic acids. Further, a water based adhesive is described, which in addition contains S-PVOH as the emulsifier. The product provides an adhesive with high speed of set, making it useful for adhering various substrates together (e.g., paper, wood, plastics, metals, etc., in particular porous substrates). The product of JP 1998036801 A, however, provides less than D3 type water resistance and does not provide sufficient heat resistance, especially when adhesives containing the base dispersions of the emulsion polymerization process are formulated.

JP 2001302709 A describes the emulsion polymerization of a core-shell-type polymer in the presence of S-PVOH, comprising VAC as the core-forming monomer, and a mixture of VAC/acrylic acid-based monomer, forming the shell. The product possesses excellent film forming properties but does not provide a suitable heat resistance of wood bond.
JP 57190010 discloses VAC copolymerization with an acrylamide derivative, such as NMA in the presence of a protective colloid of an 88 to 91% partially hydrolyzed X-PVOH, based on a polymer of vinyl acetate containing acrylic acid or its derivatives.

US 3,870,673 discloses a process for the preparation of a polymer dispersion being free from emulsifiers in which a vinyl ester, ethylene and an acrylamide compound are polymerized in aqueous dispersion in the presence of a radical-forming catalyst. No surfactant and no PVOH are used in this prior art. Such product again does not provide a suitable heat resistance of the wood bond.

US 4,449,978 discloses the combined use of NMA and acrylamide in emulsion polymerization of surfactant stabilized VAE copolymerization to reduce the formaldehyde content of a nonwoven binder, however providing much too low water and heat resistance which prevents its use as a woodworking adhesive.

### D4 water resistance of adhesive formulation

Several specific attempts have been made to further improve water resistance of the wood bond to achieve water resistance class D4 according to DIN EN 204/205.

EP 0 433 957 A2 discloses a vinyl ester "graft" copolymer dispersion containing a metal salt of monobasic acids wherein the vinyl ester "graft" copolymer is composed of 2-12 wt.% of one ore more polyvinyl alcohols having a degree of hydrolysis of 60 to 99 mol% and of 88-98 wt%, based on total weight of monomers, of (a) vinyl esters of saturated, highly branched aliphatic monocarboxylic acids having 9 or 10 carbon atoms, vinyl pivalate, diisopropyl maleate, diisopropyl fumarate, or mixtures thereof; of (b) vinyl esters other than (a) having 1 to 18 carbon atoms in the acid radical; of (c) copolymerizable ethylenically polyunsaturated monomers and (d) of other copolymerizable mono-ethylenically unsaturated monomers. The partially hydrolyzed polyvinyl alcohols having a degree of preferably 75 to 95 mol% act as "graft" base. D4 water resistance may only be achieved in case N-alkylol acrylamide as an option of nitrogen-containing monoolefinically unsaturated monomer, is applied in amounts greater than 1 wt.%, based on total monomer. Such system is a typical two-component system with a shelf life of only a few days after adding the acidic catalyst.

US 5,545,648 and EP 1 240 268 A1 disclose aqueous emulsion adhesives based on vinyl ester (co)polymers containing polyvinyl alcohol or partly masked polyaldehydes within PVOH. D4 water resistance is achieved in examples based on VAC homopolymer dispersions obtained in the presence of partially hydrolyzed PVOH by aldehyde crosslinking of the PVOH. The shelf life of the adhesive, however, is in the range of only hours or days.

EP 0 778 290 A2 discloses a redox catalyst system for the free radical emulsion polymerization of ethylenically unsaturated compounds, comprising at least one oxidizing agent and at least one reducing agent comprising an at least bifunctional aldehyde having at least 3 carbon atoms which is completely masked as bisulfite adduct. Examples demonstrate that D4 water resistance can be achieved using the disclosed reducing agent. Shelf life of the adhesive is comparable to those disclosed in US 5,545,648.

US 5,391,608 and US 5,439,960 describe woodworking adhesive compositions prepared by a two stage emulsion polymerization procedure wherein the first stage comprises the step of emulsion polymerizing VAC with a post-crosslinking monomer in the presence of PVOH to produce a PVOH stabilized copolymer, containing no pre-crosslinked monomers and the second stage comprises a step of emulsion polymerizing methyl methacrylate (MMA) to produce a MMA homo- or copolymer containing at least 75 wt.% MMA. The second stage monomer composition also includes an N-methylol compound, such as NMA, and a pre-crosslinking monomer, such as triallyl cyanurate or diallyl maleate. The polymerization is carried out using protective colloid as the stabilizing agent, which is generally a standard grade of PVOH. Water resistant products presented in examples of US 5,391,608 using 3.4 wt.% of NMA in the first stage exhibit poor shelf life.

US 6,872,278 B2 discloses an adhesive composition comprising (a) an emulsion comprising a multi-stage polymer comprising (i) a first stage polymer (initial reactor charge) comprising from 0.5 wt% to 3 wt.% latent crosslinking monomer based on the first stage monomer weight and (ii) a second stage polymer (delayed) being from the said first stage polymer; (b) formaldehyde-based crosslinking agent; and (c) an acidic catalyst. These adhesives are reported to pass D4 requirements of DIN EN204/205 and to provide WATT 91 heat resistance of at lest 7 N/mm².
According to examples of US 6,872,278 preferred stage 1 monomers include VAC and versatic acid esters and NMA. Second stage monomers include VAC/NMA or MMA/NMA.
Polymerization is carried out in the presence of a protective colloid and a surfactant. The patent does not disclose the use of PVOH of saponification grade greater than 92 mol%. It is obvious from the examples and claims of US 6,872,278 that good performance regarding water and heat resistance requires the use of excessive amounts of the formaldehyde-based crosslinking agent (b).

WO 03/000818 relates to a multi-component adhesive that contains at least two components A and B, wherein (a) component A contains at least one polymer dispersion, comprising water, at least one polymer obtainable by emulsion polymerization, at least one protective colloid, at least one water-soluble acidic metal salt, and (b) component B contains at least one crosslinking resin. Again an additional compound which is a crosslinking resin is required.

DE 199 41 904 describes the use of VAC based emulsion copolymers for bonding particle boards. Emulsions exemplified in DE 199 41 904 only achieve D4 water resistance after hot pressing. Otherwise, at best borderline D3 quality is achieved.

EP 1 304 339 discloses a vinyl acetate based polymer latex composition of (a) partly hydrolyzed PVOH, (b) a monomer mixture comprising VAC, and (d) optionally one or more additional co-monomer(s), in the presence of (c) a chain transfer agent, said VAC based polymer latex composition having a weight average particle size ≥ 400 nm and a higher shear thinning factor than the VAC based polymer latex composition (a), (b), and (d) obtained without the addition of the chain transfer agent. In the case of using a versatic acid vinyl ester as a component (d) D4 water resistance was obtainable in a wood adhesive formulation containing butyl carbitol acetate as a coalescing agent and aluminum chloride as a catalyst. Shelf life of these dispersions is limited to a few days.

Commercially available products showing D4 water resistance generally suffer from several disadvantages: some of them only provide borderline D4 water resistance, some of them suffer from too low shelf life of well below about 20 days, some of them are very sensitive regarding viscosity increase over time when storage temperature is increased, some of them suffer from much too low heat resistance, some of them suffer from aggressive smelling due to the used crosslinking compound, some of them are not white glues but show undesirable yellow to brown color. Others require the addition of excessive amounts of crosslinking compound or resin to the adhesive formulation.

With respect to water resistance D4 quality of an aqueous wood adhesive based on emulsion copolymers of vinyl esters and N-alkylol-compounds, such as NMA, conventionally two different approaches are to be distinguished:
First, an adhesive formulation not containing a crosslinking compound, and second an adhesive formulation containing an additional crosslinking compound.
The use of a crosslinking compound added to an adhesive formulation provides advantages in that the required water resistance and heat resistance can easily be obtained. Such formulations however suffer from reduced shelf life and / or from smell, and the use of the crosslinking compound adds cost to the formulation.
On the other side, D4 adhesive formulations not using the addition of crosslinking compounds, either suffer from minimized shelf life of the acidic formulation, or have a problem with other properties, especially they do not provide sufficient heat resistance of the wood bond.

The prior art does not provide D4 water resistance quality using fully hydrolyzed S-PVOH in a wood adhesive. Further, conventionally it is assumed that the use of only fully hydrolyzed PVOH as protective colloid during emulsion polymerization has a detrimental effect on the colloidal stability during polymerization or on shelf life, due to gelling. E-PVOH in emulsion polymerization generally causes problems with colloidal stability during emulsion polymerization in that the resulting product contains too much of grit or the resulting rheological properties prevent the use of the dispersion as a wood adhesive (EP 1 493 793 B1). While it has been reported that some of the problems may be overcome by using blends of partially hydrolyzed S-PVOH and fully hydrolyzed E-PVOH, the resulting products of the prior art do not provide D4 water resistance.

### Objects of the invention

The present invention therefore aims at overcoming the numerous drawbacks identified in the prior art in providing an aqueous polymer dispersion, useful as a binder in an adhesive formulation, providing improved heat resistance of a material bond, as well as in particular, improved heat and water resistance in different applications, e.g. as a wood adhesive or as an adhesive for paper and packaging. It is an object of this invention to provide an aqueous polymer dispersion, useful as wood adhesive, obtained by emulsion polymerization of vinyl ester copolymer, which comprises less than 1 wt.% based on total monomer of N-alkylol functionalized post-crosslinking monomer. It is a particularly essential object of the present invention to provide a wood adhesive based on an aqueous dispersion obtained by emulsion polymerization of vinyl ester copolymer and further comonomers, which fulfills the requirements of water resistance class D4 and which provides sufficient heat resistance of the wood bond. In particular, it is an object of the invention to provide a binder, in particular a wood adhesive formulation, containing exclusively fully hydrolyzed PVOH as protective colloid which provides a water resistance of the bond measured as D4 value according to DIN EN204/205 of at least 4 N/mm², thereby fulfilling the class D4 requirements of water resistance. The binder should furthermore also provide improved heat resistance in terms of WATT 91, best of at least 6 N/mm².

The aqueous polymer dispersion should in addition show improved viscosity stability even after storage at temperatures well below and well above ambient temperature. Shelf life in the sense of the invention is defined as the time span until the viscosity of the aqueous polymer dispersion doubles. Further the viscosity stability or long term processibility of the adhesive formulation comprising the aqueous polymer dispersion shall be improved providing good processibility or workability over several months.

The polymer dispersion of the present invention shall further minimize the content of formaldehyde or formaldehyde releasing compounds.

The rheological behavior of the aqueous polymer dispersion should be shear thinning, i.e. the shear thinning factor SF should preferably be positive. The particle size characterized as median of volume distribution function x_{3,50} of the aqueous dispersion should be kept low, best below 3500 nm. Grit content above 40 µm should be low, in particular less than 1000 ppm based on aqueous polymer dispersion.

It is a further object of the invention to provide an adhesive formulation making use of the advantages of the aqueous polymer dispersion for bonding porous or semi-porous substrates together or to other substrates including wood, wood fiberboard, paper, cardboard, corrugated card board, parquet, foamed plastic, cement, plaster, leather, textile, nonwoven, carpets, glass fibers or mineral fibers, and the like.

It is a further object of the invention to provide a process of emulsion polymerization to provide the aqueous polymer dispersions of the invention.

These and other objects solved by the present invention will become apparent from the present specification and examples.

### Brief Summary of the Invention

Thus, the present invention relates to an aqueous polymer dispersion obtainable by emulsion copolymerization of vinyl ester monomers (a) in the presence of fully hydrolyzed polyvinyl alcohol (PVOH) (c), using comonomers (b),
wherein the vinyl ester monomers (a) comprise a first component (a1) of versatic acid ester(s) and a second component (a2) of vinyl acetate,
wherein the comonomer(s) (b) comprise
a (meth)acryl amide derivative (b1) of the general formula CH₂ = CX - CO - NHY,
wherein X is hydrogen or a methyl group, Y is the group - (CH₂)ₙ - O - Z, wherein n is an integer in the range of 1 to 6, and Z is hydrogen or an alkyl or acyl group having up to 4 carbon atoms,
and a (meth)acryl amide derivative (b2), different from (b1), of the general formula CH₂ = CX-CO-NHY,
wherein X is hydrogen or a methyl group, Y is hydrogen or the group - (CH₂)ₙ - O - Z, wherein n is an integer in the range of 1 to 6, and Z is an alkyl or acyl group having up to 4 carbon atoms,
wherein the fully hydrolyzed polyvinyl alcohol (PVOH) (c) comprises a blend of fully hydrolyzed Standard-PVOH (S-PVOH) having an average degree of hydrolysis above 95 mol% and of fully hydrolyzed modified PVOH (X-PVOH) having an average degree of hydrolysis above 95 mol%. Preferably the average degree of hydrolysis of fully hydrolyzed modified PVOH (X-PVOH) is in the range of 98.04 mol% to 99.96 mol%. The polymer dispersion comprises up to 3.0wt.-% of co-monomers (b), based on total monomers.

Thereby the present invention provides an aqueous polymer dispersion, useful for an adhesive, providing a water resistance, measured as a D3/3 value and D4/5 value of a wood bond according to DIN EN 204/205 of at least 4 N/mm², and a heat resistance measured as WATT 91 value according to DIN EN 14257 of at least 6 N/mm². It is in particular the presences of acrylamide comonomer (b2) which surprisingly improves heat resistance and allows for a significant reduction in NMA content. The aqueous polymer dispersion of the invention and the adhesive formulation comprising the aqueous polymer dispersion furthermore provide an increased shelf life in terms of viscosity stability or long term processibility or workability of at least 3 months.

The invention further relates to an adhesive formulation comprising the aqueous polymer dispersion of the invention, further comprising per 100 parts per weight (ppw) of the aqueous polymer dispersion one or more of the following ingredients:
up to 5 ppw, preferably 1 to 4 ppw of a coalescing agent (d), and/or
0.05 to 5 ppw, preferably 0.5 to 4.0, in particular 1.5 to 3.5 ppw of an acidic catalyst (e), and/or
up to 6 ppw, preferably 1 to 4 of post polymerization added PVOH (f), different from PVOH (c), and/or
up to 5 ppw, preferably 1 to 3 of a viscosity modifier (g), and/or
up to 10 ppw, preferably 2 to 6 of urea (h).

The object(s) of the invention is/are further solved by the use of the aqueous polymer dispersion according to the invention to provide to an adhesive formulation a water resistance, measured as a D3/3 value and D4/5 value of a wood bond according to DIN EN 204/205 of at least 4 N/mm² and/or
to provide to an adhesive formulation a heat resistance measured as WATT 91 value of a wood bond according to DIN EN 14257 of at least 6 N/mm² and/or
to provide to an adhesive formulation improved viscosity stability and/or long term processibility and/or workability.
The invention further relates to the use of the aqueous polymer dispersion according to the invention or of the adhesive formulation according to the invention in one or more of the following applications:
a) as adhesive for wood working or as wood glue,
b) as adhesive for paper and packaging, in particular for case sealing, book binding, bag making, card board lamination
c) as parquet adhesive,
d) in binders for carpets,
e) in binders used for wood fiber boards, leather fiber material, glass and mineral fiber materials,
f) in binders for isolation materials made from paper- plastic-, glass-, or mineral fibers,
g) in binders for cement and plaster,
h) in binders for textile and nonwovens or in textile finish.

The invention further relates to a process of making such aqueous polymer dispersion, comprising emulsion copolymerization of vinyl ester monomers (a) in the presence of fully hydrolyzed polyvinyl alcohol (PVOH) (c), using comonomers (b),
wherein the vinyl ester monomers (a) comprise a first component (a1) of versatic acid ester(s) and a second component (a2) of vinyl acetate,
wherein the comonomer(s) (b) comprise N-alkylol acrylamide (b1) and (meth)acryl amide (b2),
wherein the fully hydrolyzed polyvinyl alcohol (PVOH) (c) comprises a blend of fully hydrolyzed Standard-PVOH (S-PVOH) having an average degree of hydrolysis above 95 wt% and of fully hydrolyzed modified PVOH (X-PVOH) having an average degree of hydrolysis above 95 mol%, preferably in the range of 98.00 mol% to 99.96 mol%,
wherein the polymerization is optionally performed in the presence of one or more oxidizing agent(s) (i) such as selected from the group consisting of peroxides, and/or
one or more reducing agent(s) (j) such as selected from the group consisting of tartaric acid, ascorbic acid, formic acid, sodium erythorbate, or mixtures thereof.

The polymer dispersion, the adhesive formulation and the process according to the invention offer improved heat and water resistance due to the involvement of vinyl ester monomers (a1) and (a2) as well as comonomer(s) (b1) and (b2) in the polymerization and stabilization of the emulsion during polymerization by fully hydrolyzed PVOH. Further, the aqueous polymer dispersion binder employing only low amounts of N-alkylol acrylamides, avoids the need of other crosslinking compounds or resins as described e.g. in DE 10335673, DE 19949332, DE 4420484, EP 826008, EP 778315, EP 778290, EP 892509. Further, the amount of releasable formaldehyde is minimized. The polymer dispersions of the invention furthermore show excellent creep resistance, sufficient hard wood adhesion, and also very fast setting speed.

### Detailed Description of the Invention.

The vinyl ester monomer component (a) comprises vinyl acetate (VAC) and versatic acid ester(s). It may further comprise vinyl propionate, vinyl pivalate, vinyl laurate, vinyl 2-ethyl hexanoate, dibutyl maleate, dioctyl maleate, diisopropyl maleate, diisopropyl fumarate, or mixtures thereof. Vinyl ester monomers (a) are preferably used in an amount of up to 99.5 wt.%, preferably 95.0 to 99.4 wt.%, more preferably 97.0 to 99.0 wt.%, based on total used monomer. Vinyl ester monomer component preferably comprises 0.5 to 25 wt.%, in particular 5 to 20 wt.%, even more preferred 8 to 16 wt.% based on total monomers, of component (a1), wherein component (a1) is preferably a vinyl ester of a versatic acid having 9 to 13 C atoms, more preferred having 9, 10 or 11 C atoms.

The comonomer(s) (b), as defined above, comprise at least two different (meth)acrylic acid amide derivatives (b1) and (b2), copolymerizable with the vinyl ester monomers (a) which are selected from the group of (meth)acrylic acid amide derivatives of the general formula

CH₂ = CX - CO - NHY,

wherein the comonomer(s) (b) comprise
a (meth)acryl amide derivative (b1) of the general formula CH₂ = CX - CO -NHY, wherein X is hydrogen or a methyl group, Y is the group - (CH₂)ₙ - O - Z, wherein n is an integer in the range of 1 to 6, and Z is hydrogen or an alkyl or acyl group having up to 4 carbon atoms,
and a (meth)acryl amide derivative (b2) of the general formula CH₂ = CX - CO - NHY,
wherein X is hydrogen or a methyl group, Y is hydrogen or the group - (CH₂)ₙ - O - Z, wherein n is an integer in the range of 1 to 6, and Z is an alkyl or acyl group having up to 4 carbon atoms,

Component (b1) is preferably selected from one or more of N-alkylol (meth)acrylamides, N-alkoxyalkyl (meth)acrylamides and N-acyl (meth)acrylamides, more preferably selected from N-alkylol acrylamide, N-(isobutoxymethyl) acrylamide (IBMA), N-(Isobutoxymethyl) methacrylamide (IBMMA), N-(n-butoxymethyl) acrylamide (NBMA) and N-(n-butoxymethyl) methacrylamide (NBMMA). A preferred component (b1) is selected from IBMA and N-alkylol acrylamide.

A particularly preferred component (b1) comprises N-methylol acrylamide (NMA).

Component (b2) is preferably selected from one or more of (meth) acrylamide, N-alkoxyalkyl (meth)acrylamides and N-acyl (meth)acrylamides, more preferably selected from acrylamide, N-alkylol acrylamide, N-(isobutoxymethyl) acrylamide (IBMA), N-(Isobutoxymethyl) methacrylamide (IBMMA), N-(n-butoxymethyl) acrylamide (NBMA) and N-(n-butoxymethyl) methacrylamide (NBMMA). A preferred component (b1) is selected from IBMA and acrylamide. A particularly preferred component (b2) comprises acrylamide.

It is thus to be understood that the combinaton of (b1) of the general formula CH₂ = CX - CO - NHY,
wherein X is hydrogen or a methyl group, Y is the group - (CH₂)ₙ - O - Z, wherein n is an integer in the range of 1 to 6, and Z is hydrogen or an alkyl or acyl group having up to 4 carbon atoms, with component (b2) being (meth)acrylamide, in particular acrylamide, represents a preferred embodiment of the invention.

Most preferably, component (b) comprises both, (b1) N-methylol acrylamide (NMA) and (b2) acrylamide. However, a component (b) comprising (b1) N-methylol acrylamide (NMA) and (b2) IBMA, is also preferred.

Comonomer(s) (b) may further comprise monomers selected from the group consisting of C1-C8 acrylate and methacrylate esters, ethylenically unsaturated acid monomers, 2-acrylamido-2-methylpropane sulfonic acid, vinylsulfonic unsaturated acid monomers and their anhydrides, acrylonitrile, and mixtures thereof. Ethylenically unsaturated acid monomers include (meth)acrylic acid, crotonic acid, itaconic acid, maleic acid, fumaric acid, and their anhydrides.

The term (meth)acrylic acid includes acrylic acid and methacrylic acid, and the term (meth)acrylamide includes acrylamide and methacrylamide, respectively.

The aqueous polymer dispersion according to the invention comprises up to 3 wt.%, preferably 0.6 to 3.0 wt.% of co-monomers (b), based on total monomers, in particular comprising 0.2 to less than 1.00 wt.%, based on total monomers, of co-monomer (b1).

The function of the (meth)acrylic acid amide compound(s) included within the inventive composition is a surprising and significant improvement of heat resistance, measured as WATT 91 value according to DIN EN 14257, without detrimental effect to shelf life and dispersion stability. A heat resistance of WATT 91 of at least 6 N/mm² may be achieved according to the invention.

By reducing the amount of acidic crosslinkable N-alkylol acrylamides, such as NMA, improved viscosity stability and/or long term processibility and/or workability of the aqueous polymer disperssion and of the adhesive formulation are achieved, surprisingly without sacrificing water and heat resistance of the dispersion.
The fully hydrolyzed polyvinyl alcohol (PVOH) (c) comprises a blend of fully hydrolyzed Standard-PVOH (S-PVOH) having an average degree of hydrolysis above 95 mol%, preferably above 97 mol% and even more preferred above 98 mol%, and of fully hydrolyzed modified PVOH (X-PVOH) having an average degree of hydrolysis above 95 mol%, preferably above 97 mol% and even more preferred above 98 mol%.

In particular the S-PVOH or the X-PVOH, or both have a degree of hydrolysis in the range of 95.1 to 99.96 Mol%, preferably in the range of 97.1 to 99.96 and even more preferred in the range of 98.04 to 99.96 mol%.

The fully hydrolyzed S-PVOH (c) can be a single S-PVOH grade, but preferably it is an S-PVOH blend having an average degree of hydrolysis of above 97 Mol%, preferably between 98.1 and 99.9 mol%, and even more preferred between 98.1 and 99.6 mol%.
The fully hydrolyzed X-PVOH (c) can be a single X-PVOH grade, but preferably it is an X-PVOH blend having an average degree of hydrolysis of above 97 Mol%, preferably between 98.04 and 99.96 mol%, and even more preferred between 98.1 and 99.6 mol%.

In a particularly preferred embodiment of the invention, the S-PVOH has an average degree of hydrolysis in the range of 97.1 to 99.9 mol% and/or wherein the X-PVOH has an average degree of hydrolysis in the range of 98.04 to 99.96, in particular 98.1 to 99.6 mol%.

Best results in terms of water resistance are achieved, when no partially hydrolyzed S-PVOH is present having an average degree of hydrolysis up to 95 mol%, and/or wherein no partially hydrolyzed X-PVOH is present having an average degree of hydrolysis up to 98.00 mol%.

At least one component of the blend of fully hydrolyzed PVOH is an X-PVOH, wherein the X-PVOH comprises ethylene modified PVOH (E-PVOH), wherein the ethylene content is preferably within the range of 2 to 9 mol%. The content of ethylene units in the E-PVOH in the chain is estimated by ¹H NMR analysis. It can also be beneficial to use more than two E-PVOH components within the fully hydrolyzed PVOH (c). The blend components preferably are chosen different regarding their molecular weight, here expressed as viscosity of their 4 wt.% aqueous solutions measured at 20 °C. Fully hydrolyzed PVOH grades possessing a viscosity between approx. 3 mPas and 40 mPas can favorably be used. If more than 2 PVOH grades, different in molecular weight are used, then the ratio of their 4 wt.% solution viscosities is preferably in the range between approx. 5 to 10. The amounts of high and low molecular weight PVOH in this case are preferably at least 10 wt.% of each component based on total fully hydrolyzed PVOH (c). The inventors have surprisingly found, that the tendency of grit formation during emulsion polymerization was significantly reduced, if the molecular weight distribution of the PVOH blend was broadened by blending high, medium, and low molecular weight fully hydrolyzed PVOH components. High molecular weight PVOH would possess a 4 wt.% solution viscosity above about 20 to 25 mPas; medium molecular weight PVOH would possess a 4 wt.% solution viscosity between about 10 to 20 mPas, and low molecular weight would possess a 4 wt.% of less than 10 mPas.

The amount of E-PVOH based on total used fully hydrolyzed PVOH, if used within the fully hydrolyzed PVOH blend, is preferably within the range 0 and 60 wt.%, preferably in the range 0 to 50 wt.%, and even more preferably within the range of 0 to 40 wt.%.

For optimal results, the fully hydrolyzed polyvinyl alcohol (PVOH) (c) is present in an amount of 4 to 10 wt.%, preferably in an amount of 6 to 9 wt.%, and in particular in an amount of 7 to 9 wt.% based on total monomers (a) and (b).

When applying the vinyl ester monomers (a), the co-monomers (b) and the fully hydrolyzed PVOH (c) in conventional emulsion polymerization, then the resulting aqueous dispersion may have a solid content within the range of 40 to 60 wt.%, preferably in the range of 45 to 55 wt.%.

There are no special limits regarding the kind of the coalescing agent (d) used for wood adhesive formulation. In some embodiments of the invention, no coalescing agent may be used. In further embodiments of the invention, the coalescing agent facilitates meeting a required minimum film forming temperature of the wood adhesive. In European wood glue formulations, the requirement is less than about 6 °C. Any coalescing agent known in the art for wood glues can be used. Preferably butyl carbitol acetate (BCA), or propylene carbonate (PC), or mixtures thereof are used according to the present invention. More preferred is the use of only PC in the adhesive formulation according to the invention, for application on wood. The amount of coalescing agent based on solids of the aqueous dispersion, obtained by emulsion polymerization, may beneficially be in the range of 0 to 8 wt.%, preferably in the range of 3 to 6 wt.%, and most preferred in the range of 3 to 5 wt.%.

Additionally the wood adhesive formulation contains 0.05 wt.% up to 5 wt.% based on the aqueous polymer dispersion of an acidic catalyst (e), preferably an acidic water soluble metal salt, such as such as aluminum sulfate, or aluminum nitrate, or aluminum chloride, or chromium(III)- or zirconium(IV)- salts, or para-toluene sulfonic acid, or the like, known in the art. Preferred is the use of aluminum chloride or of aluminum nitrate.

The optional PVOH component (f), may be the same but is preferably different from the fully hydrolyzed PVOH (c) used in emulsion polymerization. The function of the optionally added PVOH (f) is to further improve rheological properties of the adhesive formulation and eventually to further improve the wood bond strength. There are no special limits regarding molecular weight and degree of hydrolysis of the PVOH (f). The PVOH (f) can be a single component or a blend of different PVOH components. The blend components can be added as separate solutions or together in one solution. Preferably, no more then three components are added. The average molecular weight, here expressed as viscosity of a 4 wt.% aqueous solution measured at 20 °C, of the PVOH (f) is > 20 mPas, preferably > 30 mPas., the average degree of hydrolysis is > 88 mol%, preferably > 90 mol%. If more than one PVOH component is used as the PVOH (f), which are different in molecular weight and eventually different regarding degree of hydrolysis, then the ratio of the 4 wt.% solution viscosity of the highest molecular weight component and of the lowest molecular weight component is best in the range between approx. 2 to 20, or preferably from 3 to 10. Preferably the viscosity of the highest molecular weight component is > 40 mPas, more preferably it is at least 50 mPas. Preferably the viscosity of the lowest molecular weight component is less than 20 mPas. If more than one PVOH component is used as the PVOH (f), then the fraction of the lowest molecular weight component is preferably less than 50 wt.% and the fraction of the highest molecular weight PVOH is preferably greater than 10 wt.% based on totally added PVOH (f). The amount of the optionally added PVOH (f) based on solids of the aqueous dispersion is preferably in the range of 0.1 to 7 wt.%, more preferably in the range of 0.1 to 5 wt.%, and in particular in the range of 0.1 to 4 wt.%.

The optionally added viscosity modifier (g) has the function, if desired, to further adjust viscosity and viscosity stability, which is the stability of viscosity when stored at different temperatures. When stored at different temperatures then only a small or no irreversible change of viscosity should occur. Any compound fulfilling this purpose can be used which is compatible with the wood adhesive formulation and which does not deteriorate the other required properties of the wood adhesive. For example: mono- or polyvalent alcohols, e.g., propanol, i-propanol, butanol, pentanol, glycol, glycerin, D-mannitol, sorbitol, erythritol, pentaerythritol, trimethylol propane, triethanol propane; glycol ether compounds, such as listed in US 6,451,898; or polyethylene glycol compounds, can be used alone or in combinations.

The amount of the optionally added viscosity modifier is preferably in the range of 0.1 to 5 wt.% based on weight of the aqueous dispersion, more preferably 0.5 to 4.5 wt.%, and even more preferred 1 to 4 wt.%.

Further, urea may be included within the wood adhesive formulation as a component (h). Urea may be added to minimize discoloration of the adhesive film when higher temperatures are used during the bonding process, either to shorten the time for obtaining maximum bond strength, or to accelerate curing processes. On the other hand in conventional wood adhesive formulations, based on vinyl ester copolymers including N-methylol compounds obtained by emulsion polymerization in the presence of partially hydrolyzed PVOH, urea has a negative influence on the water resistance and especially on heat resistance. A typical commercial D3 wood glue, such as VINAC® DPN15, formulated with 2 parts of urea shows a decrease of D3 value according to the DIN EN205 test procedure, and a significant decrease of the heat resistance in terms of WATT in the range of about 0.6 N/mm² according to DIN EN 14257.

It is a surprising finding of the present invention, that the adhesive formulation of the present invention, suitable for wood applications, based on the aqueous polymer dispersion of the present invention comprising fully hydrolyzed PVOH, addition of urea to the adhesive formulation even results in an increase of water resistance and a particularly significant increase of heat resistance. Therefore, it is preferred to include urea in the formulations of the present invention. In a particularly preferred embodiment of the invention, the amount of urea based on the weight of the aqueous dispersion is in the range of 0.5 to 10 wt.%, preferably within the range of 1 to 5 or in the range of 1 to 3 wt.%. Urea may further influence the viscosity of the adhesive formulation and its long term processibility or workability..

In further embodiments of the invention, the adhesive formulation may comprise further additives, such as: a biocide, biocide combinations, starch, or modified starch, oxidized starch; sodium alginate; cellulose compounds such as carboxymethyl cellulose, methyl cellulose, hydroxymethyl cellulose, or hydroxyethyl cellulose; different compatible fillers, wood meal; extenders such as flour; pigments such as titanium oxide; colloidal silica; antifoaming agents; and anti-freezing agents; and any mixtures of these. Further, though not necessary to fulfill requirements regarding D4 water resistance and high heat resistance of WATT 91 > 6 N/mm², there may be resins included within the adhesive formulation such as formaldehyde resins, e.g. resorcinol formaldehyde, urea formaldehyde, melamine formaldehyde, and phenolformaldehyde; as well as A- or B-stage phenolic resins, such as trimethylol phenol oligomer; polyvalent isocyanate compounds as described in EP 0 699 697;, and mixtures of these.

The Emulsion Polymerization Process

The emulsion polymerization of vinyl esters (a) and co-monomers (b) in the presence of the fully hydrolyzed PVOH (c) can be carried out in conventional manner using a radical forming compound.
The radical forming compound can be selected from the group of inorganic persulfates, such as sodium persulfate, potassium persulfate, or ammonium persulfate; peroxides, such as hydrogen peroxide, or organic hydroperoxides, such as t-butyl hydroperoxide (tBHP). Organic peroxides, such as benzoyl peroxide; or azo-based catalysts; may be used as well, either alone or in combinations thereof.
Preferably, in addition to the oxidizing radical forming agent, a reducing agent is used. Typical reductants are the sulfoxylates, such as sodium formaldehyde sulfoxylate (SFS); sulfites, such as sodium sulfite, or sodium hydrogen sulfite; sodium hydrogencarbonate; dithionites, such as sodium dithionite; acidic compounds and their salts, such as tartaric acid, ascorbic acid or sodium isoascorbate, and the like.
The redox reaction may be catalyzed by traces of ferrous ammonium sulfate, or the like. Thermal initiation by hydrogen peroxide or organic peroxides or by inorganic persulfates may also be advantageously applied.
It is also possible to start the reaction by a redox initiation step and to run the polymerization later on only by thermal initiation. It is further possible to use more then one oxidizing and more then one reducing agent.

There are no special limits regarding the kind and amount of the initiator, or of the initiator components, for carrying out polymerization reaction. Kind and amount of initiator may have a more or less significant influence on properties, especially on stability properties of the aqueous dispersion in general, during or after the polymerization, and also regarding properties of the adhesive formulation made with the aqueous dispersion as the main component of it. Such stability properties include: loss of stability with increasing polymer concentration during polymerization, during reaction finishing, upon cooling down after polymerization, or afterwards; formation of coagulum and/or grit during polymerization; undesirable flow behavior of the aqueous dispersion connected often to particle aggregation processes during the course of polymerization including the finishing of reaction or during the post polymerization, known as shear thickening or dilatancy; and also undesirable change of viscosity upon storage, known as instability of viscosity or loss of processibility or workability. It is known to the expert how to significantly reduce or overcome such stability problems not only but also by the right choice of kind and amount of initiator or initiator components. Depending on the kind of co-monomers (b) and on the composition of the fully hydrolyzed PVOH blend (c) the kind and amount of initiator compound(s) may vary. Nevertheless, it is preferred here to use oxidizing agents which at least comprise hydrogen peroxide or an inorganic persulfate, as named above, as one initiator component; it is further preferred to use at least one reducing agent selected from the group of ascorbic acid, sodium isoascorbate, and tartaric acid.
There are no special limits regarding kind amount of oxidizer or reducing agents used for post polymerization. SFS can be very effective but is a strong formaldehyde source and will therefore not be preferably used. Any combination, effective for converting un-reacted or residual monomer can be used. To give an example: tBHP can be used as oxidizing agent, and SFS or preferred ascorbic acid or its sodium salt, known as sodium erythorbate can be used as reducing agents. Traces of a catalyst, e.g. ferrous ammonium sulfate can be added to support redox reaction, if desired.

When using E-PVOH as a stabilizing water soluble compound, or as a part of the stabilizing PVOH blend, certain defined amount of oxidizing initiator compound as described in US 6,451,898 or in JP 2001172591 A may be favorably used. It was surprising to find, that the stable aqueous dispersion of the present invention were obtainable by continuous feeding of the whole oxidizing compound, thus avoiding any shot of it before or during the polymerization. Such procedure has the advantage of avoiding any safety problems in large production reactor scale.

If reducing agent(s) are used - as preferred - then the mode of introducing them into the polymerization process has no special limits. It is preferred to add at least 50 wt% to the initial reactor charge, before starting the feeding process of the oxidizing compound(s), and the remaining fraction can be fed to the polymerizing system in one shot, or parallel to the oxidizer(s), starting at any desired time. In a preferred embodiment of this invention all of the used reducing agent, besides that used for post-polymerization, is included within the initial charge.
One may also feed both, the oxidizer and the reducing agent, without any initial charge of both, as for instance laid open in JP 2001163902, or EP 0 692 494, or DE 696 04 151, or US 5,599,870, especially when a combination of hydrogen peroxide / SFS is used; but the use of SFS has the disadvantage of being a source of formaldehyde, which is preferably avoided in this invention.

In principle the emulsion polymerization can be carried out with only using the fully hydrolyzed PVOH, acting as a protective colloid. But additionally, if desired, further particle stabilization can be achieved using low molecular weight surfactants or emulsifiers. Any anionic or nonionic surfactant may be used, known in the art, useful in stabilization of vinyl ester monomer, provided that the desired properties of the aqueous dispersion and of the adhesive formulation, do not suffer damage. The use of surfactant may not necessarily lead to failure of water resistance of wood bond, nevertheless, if the use of surfactant is not desired for other reason, the polymerization is preferably carried out without surfactant. Also the use of poly ethylene glycols can be considered for additional particle stabilization, or for other reasons, as known in the art from US 6,673,862 for the emulsion polymerization of vinyl acetate ethylene copolymerization.

Further, all water-insoluble, hydroxyl group containing compounds such as described in US 6,780,931 can be also used during emulsion polymerization to modify particle size distribution and / or to influence viscosity and viscosity stability.

It is also possible to use crosslinking agents and / or chain transfer agents during the emulsion polymerization. Such agents are well known in the art, e.g. described in US 6,552,115 B1, or EP 1304399 B1.

The process of emulsion polymerization comprises emulsion copolymerization of vinyl ester monomers (a) in the presence of fully hydrolyzed polyvinyl alcohol (PVOH) (c), using comonomers (b),
wherein the vinyl ester monomers (a) comprise a first component (a1) of versatic acid ester(s) and a second component (a2) of vinyl acetate,
wherein the comonomer(s) (b) comprise N-alkylol acrylamide (b1) and (meth)acryl amide (b2),
wherein the fully hydrolyzed polyvinyl alcohol (PVOH) (c) comprises a blend of fully hydrolyzed Standard-PVOH (S-PVOH) having an average degree of hydrolysis above 95 wt%, preferably between 97.1 and 99.9 mol%, and of fully hydrolyzed modified PVOH (X-PVOH) having an average degree of hydrolysis above 95 mol%, preferably in the range of 98.04 mol% to 99.96 mol%,
wherein the polymerization is optionally performed in the presence of one or more oxidizing agent(s) (i) such as selected from the group consisting of peroxides, and/or
one or more reducing agent(s) (j) such as selected from the group consisting of tartaric acid, ascorbic acid, formic acid, sodium erythorbate, or mixtures thereof.

In general the fully hydrolyzed PVOH (c) will be used as an aqueous solution, containing approx. 5 to 15 wt.% of the PVOH (c), which can be prepared as known in the art separately in a solution vessel or directly in the polymerization vessel, which is appropriately equipped. The initial charge of the polymerization vessel preferably contains at least a fraction of the PVOH solution, at least 20 wt.% of it, preferred at least 50 wt.%, but most preferred all of it, so that advantageously a delay of the PVOH solution is avoided. Further, if desired, additional amount of water, up to 100 wt.% of the vinyl ester monomer, preferred up to 25 wt.%, but most preferred up to 10 wt.% of the vinyl ester monomer, and - if used - up to 100 wt.% of the reducing agent, will be charged to the reactor, representing the initial reactor charge. If desired traces of a catalyzing agent, e.g. ferrous ammonium sulfate, can also be added. Up to 100 wt.% of the co-monomers (b) can be used in initial charge, preferred a fraction proportional to the used fraction of vinyl ester monomers can be initially charged, or nothing of the co-monomers can be initially charged. This may depend on the kind of co-monomers used. If the co-monomers (b) comprises different compounds, then it is possible that part of the compounds is initially added and the other part is not included within initial reactor charge. By this procedure, there are no special limits how the co-monomers (b) are distributed between initial charge and delays. Preferably nothing of co-monomers (b) is initially charged.

Regarding the vinyl ester monomers (a) it can be advantageous to blend both of the components (a1) and (a2) and charge part of the blend initially, or it can be advantageously to add only component (a1) or part of it to the initial charge, or it can be advantageously to add only component (a2) or part of it to the initial charge. Generally, it is preferred to add either part of the homogeneous blend of (a1) and (a2), or only part of component (a2) to the initial charge and feed later during the reaction the remaining amounts of (a1) and (a2) as a homogeneous feed or in two parallel feeds of (a1) and (a2).

In a particularly preferred embodiment of the invention,the process comprises the process steps (P1) start of the initiation, (P2) monomer delay and (P3) completion of conversion, wherein
(P1) polymerization is started at a pH in the range of 2 to 8, preferably in the range of 3 to 6, preferably at a temperature less than 60 °C,
(P2) the polymerization is continued by
   1) at least one monomer delay, wherein addition of monomer(s) (a) and/or (b) is/are delayed, preferably the conversion of initially charged monomer(s) is at least 50 %, preferably at least 80 % before the delayed monomer(s) are added,
   2) optionally by a delay of PVOH (c),
(P3) the polymerization is finished by delayed addition of oxidizer and or reducing agent(s), (P4) the residual monomer is converted by a post polymerization step, adding a different oxidizer, such as t-butyl hydroperoxide, and a different reducing agent.

pH value of initial charge and the pH value during the course of polymerization is preferably kept within the range of approx. 2 to 8, preferably between 3 and 6. pH value of initial reactor charge is preferably adjusted between 3 to 6. Desired pH value can be adjusted by acidic or alkaline solutions, e.g. by formic or sulfuric acid, or by caustic soda lye. A buffer can also be applied.

In the process of the invention hydrogen peroxide may be favourably be used as oxidizer which is added continuously - avoiding any initial shot - during the process steps (P1) to (P3).

In a particularly preferred embodiment of the process of the invention, less than 25 wt.%, preferred less than 15 wt.% of the monomers based on total monomers are initially charged to the reactor before starting process step (P1), and/or the initially charged monomers contain only the vinyl ester monomers (a), preferably only monomer component (a2), while the total amount of monomers (b) is delayed.

### Stages of Emulsion polymerization process according to a preferred embodiment of the invention

### Start of Reaction

The initial reactor charge is appropriately mixed by stirring and heated up before the initial polymerization reaction is started by feeding an aqueous solution of the oxidizer constantly, beginning at temperatures of preferably - due to safety reasons - less than 60 °C. The polymerization temperature in general can be in the range of approximately 40 to 95 °C. Upon start of reaction, the temperature will increase due to exothermic monomer conversion. Preferably such exothermic temperature increase is used - especially in large scale reactors, to further heat up the reactor to desired polymerization temperature, of approx. 70 to 95 °C.

### Delay period

The second stage of polymerization is the delay period: At desired temperature and conversion of the initially charged monomer the delays of the remaining fraction of monomers (a) and (b) are started. There are no special limits regarding the conversion of the initial monomer, before starting the delay(s). Nevertheless, for better control of the reaction and to avoid safety problems in large scale production reactors, it is preferred that the conversion of initially charged monomer is at least 50 %, preferably it is above 75 %. During the delay period the polymerization temperature is preferably > 75 °C. The rate of oxidizer solution feed can be adjusted to control temperature, if necessary, but preferably it is fixed to a constant value which can be different from initial rate. If desired the remaining fraction of the reducing agent, also used as an aqueous solution, or a part of it, can be fed to the reactor, not necessarily, but preferred at constant rate. All the remaining vinyl ester monomers (a) and all remaining co-monomers (b), and all remaining PVOH solution, if there is some left, are fed during this second stage of polymerization. Although it is possible to carry out these feedings in one shot, or using variable feeding rates, it is preferred to apply constant feeding rates of the vinyl ester monomers (a) and for the co-monomers (b) over a delay time of approx. 1 to 4 hours, mainly depending on the cooling capacity of the reactor. For instance, for a scale of 20 qm reactor a delay time of 2 to 3 hours will be possible. The vinyl esters (a) and the co-monomers (b) can be fed together or separately. It may be desired to feed also some water within this period, besides the water used in the PVOH solution - if this is fed -, or within the oxidizer solution, or within the solution of reducing agent - if such is fed -, or within an aqueous co-monomer solution - if such is fed.

### Completion of Reaction

The second stage of polymerization is finished when all monomer feeds and the PVOH solution feed - if there is such feed - have been completed. During the following third stage of polymerization the conversion of monomer is driven by further continuous feeding of oxidizer together with - if applied - the reducing agent feed. During this period the oxidizer rate, and eventually the reducing agent rate, can be increased compared to the rate within the second stage of polymerization, to achieve nearly complete monomer conversion. The duration of this stage will be normally less then 1 hour, it can as well be less than half an hour.

### Post Polymerization

Un-reacted monomer will be converted within the fourth, last stage of polymerization, the stage, where more concentrated solution of oxidizer, for instance a 10 wt.% solution of tBHP as an oxidizer, and a 10% solution of sodium erythorbate as the reducing agent can be fed continuously and parallel, or after each other, or these can be added as shots alternately.

After post polymerization is finished, or starting during this last stage of polymerization, the coalescing agent (d), the optional PVOH (f) and the optional viscosity modifier (g) can be added in parallel feeds, or after each other, or as shots. The components (d), (f), (g), and/or (h) may also be added later, after cooling down.

The cooling process is preferably executed under vacuum and reflux, to reduce the cooling down time. After cooling, then the components (d), (f), (g), and/or (h) may be mixed with the aqueous dispersion, and with further compounds, at least with acidic catalyst (e) and/or e.g. biocide, to provide the adhesive formulation.

### The Aqueous Polymer Dispersion and the Adhesive Formulation

The amounts of vinyl ester monomers (a); co-monomers (b); PVOH (c) which is applied as aqueous solution; initiator compounds also used as aqueous solutions; together with additional water, are best selected in such a way, that the resulting aqueous polymer dispersion, after completion of polymerization, has a solid content within the range of 40 to 60 wt.%, preferably in the range of 45 to 55 wt.%, most preferably it is at least 49 wt.%.

The viscosity, measured as Brookfield viscosity at 20 RPM at 23 °C, is preferably in the range of 3 000 to 30 000 mPas for a solid content between approx. 48 to 52 wt.%. As known in the art, the viscosity of an aqueous polymer dispersion, stabilized in the presence of PVOH, is a complex function of several influencing parameters, comprising: solid content, or particle volume fraction, the amount of PVOH, its molecular weight distribution, and its degree and distribution of hydrolysis, the particle size distribution of the polymer particles, the pH value during polymerization, the amount of initiator components.

While the prior art offers several approaches to improve viscosity stability upon storage at different temperatures in the presence of fully hydrolyzed PVOH or E-PVOH (JP 2001261912 A, US 6,451,898, US 5,599,870, JP 2002241411, US 6,780,931), it was very surprising to find that the polymer dispersions and adhesive formulations of the present invention did not show viscosity instability when stored at different temperatures. Even without any addition of formulation additives such as compounds (e), (f), (g), or (h) and contrary to what had been expected from the prior art and general knowledge of the skilled person, there was no irreversible viscosity instability observed at low temperature storage of aqueous polymer dispersions which are stabilized only in the presence of fully hydrolyzed PVOH.

It was also surprising that the adhesive formulation, containing the aqueous polymer dispersion and the coalescing agent (d) and an acidic catalyst and optionally the components (e), (f) and (g) comprising additionally added PVOH, viscosity modifier and urea, shows improved viscosity stability and/or excellent processibility and/or workability over several months.

The particle size of the inventive aqueous dispersion is characterized by a median of volume distribution density function X_{3,50}, measured with a COULTER® LS230 device, of X_{3,50} preferably in the range of 0.5 to 3.5 µm, more preferably of x_{3,50} in the range of 1.0 to 2.0 µm.

The aqueous polymer dispersions of this invention alone or after formulation can beneficially be used in one or more of the following applications:
a) as adhesive for wood working or as wood glue,
b) as adhesive for paper and packaging, in particular for case sealing, book binding, bag making, card board lamination
c) as parquet adhesive,
d) in binders for carpets,
e) in binders used for wood fiber boards, leather fiber material, glass and mineral fiber materials,
f) in binders for isolation materials made from paper- plastic-, glass-, or mineral fibers,
g) in binders for cement and plaster,
h) in binders for textile and nonwovens or in textile finish.

Adhesives for paper and packaging include but are not limited to case sealing, book binding, bag making, cardboard lamination.

Most important is the use as wood adhesive fulfilling the requirements of water resistance of D3/3 ≥ 4 N/mm² and D4/5 ≥ 4 N/mm² according to DIN EN 204/205, thus being a boiling water resistant D4 type wood glue, and providing a heat resistance in terms of WATT of ≥ 6 N/mm² according to WATT 91 test method DIN EN 14257. This surprising D4 type quality is achieved according to the present invention by using even only a small amount of less than 1 wt.% of crosslinking N-methylol containing compound.
The adhesive formulation has the further advantage of improved and prolonged viscosity stability and/or long term processibility and/or workability and can therefore be considered as a one-component D4 wood adhesive providing heat resistance in term of WATT of ≥ 6 N/mm².

### Examples

### 1. Test Methods

### 1.1 Particle size of aqueous dispersion

Final latex particle size distributions were obtained either using the COULTER LS230, supplied by Coulter Cooperation, Miami, Florida 33196. Samples of the final latex were diluted to appropriate concentration using pure distilled water.
Coulter LS230 measurement is based on light diffraction combined with some static light scattering and provides a particle size distribution. As the larger particles are overestimated by this instrument, the median of the volume distribution function x_{3,50} was chosen to characterize an average particle size.

In general there are no special limits regarding particle size because most important properties of the adhesive such as water and heat resistance are more or less independent from particle size. Nevertheless, to avoid particle settling in low solids or low viscous modifications of the adhesive and to avoid a drop of setting speed it is preferred that X_{3,50} is < 3000 nm, preferably it is < 2000 nm.

### 1.2 Estimation of grit of aqueous dispersion

100 Grams of polymer dispersion were diluted with distilled water (up to 1 Liter) and filtered through a nylon sieve of 150 µm mesh and subsequently through a sieve of 40 µm. Sieves were rinsed with sufficient water until only pure water passes. The residual on the sieves was dried to constant mass. Total grit content > 40 µm was calculated from the dried residual on both sieves and given as Grit 40 in parts per million (10⁶), ppm, based on polymer latex. It shall be mentioned, that the use of a 40 µm sieve for the fine grit is a very strong estimation; usually, the 50 µm, or 60 µm, or even 100 µm sieves are used for fine grit estimation. Such less strict estimation of fine grit would result in reduced values of total Grit 40 by 20, to 40, to 80% as compared to the results reported herein.

For practical use in a wood glue it is desired that the value of Grit 40 is < 1000 ppm, preferably < 800 ppm, and most preferably < 600 ppm.

### 1.3 Viscosity and shear thinning of aqueous dispersion

Latex viscosity was measured using Brookfield viscosimeter. Viscosity data were taken for 1, 10 and 20 RPM. The latex viscosity is given for 20 RPM as Bf 20. To characterize the non-Newtonian behavior a shear thinning factor SF is calculated from the viscosities at 1 and 10 RPM: SF = ((Bf1 / Bf10) - 1). A shear thinning factor SF > 0 indicates shear thinning whereas SF < 0 stands for shear thickening. All measurements were done at 23 °C.

There are no special limits regarding viscosity. For practical use according to European accepted customs viscosity Bf20 should be in the range of 3000 to 30000 mPas if solid content is in the range of 45 to 55 wt.%. Also with respect to practical use it is desired that shear thinning factor is in general SF > 0, preferably SF is between 0.1 and 2.5, more preferably SF is in the range of 0.2 and 2.0.

### 1.4 Viscosity stability upon storage

Aqueous dispersion samples of about 250 grams were either left to stand at room temperature (RT) over a period of about three months; or for 10 days at about 5 °C, or for 10 days at about 50 °C. After such storage the samples - following equilibration to ambient temperature RT- were evaluated by expert's eye before any stirring regarding their fluidity and judged by following fluidity scores:
Score 1: fluid dispersion, no indication of structure formation;
Score 2: fluid dispersion, very little indication of structure formation;
Score 3: still fluid but some indication of structure formation;
Score 4: clear flow limit or yield point due to structure formation or "gelling";
Score 5: solid (complete irreversible gelling).
Scores 1 and 2, and in some cases also score 3 can be accepted for practical use, whereas products characterized by scores 4 and 5 are not suitable for technical use.
Viscosity Bf20 of several of these samples was measured - after short stirring by hand using a spatula - at 23 °C. Viscosity of these stirred samples was compared to their initial viscosity Bf20 before storage. Irreversible viscosity change is expressed in percent of initial viscosity in steps of 5 %. If initial viscosity is in the range of about 10000 mPas then a change of viscosity of less than about 40 % is still acceptable for practical use provided that the fluidity score is better than 3. In general an upper limit of about 30000 mPas should not be exceeded. Some adhesive formulations containing aqueous polymer dispersion, coalescing agent and acidic catalyst were characterized in the same way after storing the respective samples at room temperature and at 50 °C as given above.

It is desired that these adhesive formulations show scores not worse than 3 and irreversible viscosity increase based on initial viscosity of the formulation preferably less then 100 % (less than twice of initial viscosity).

### 1.5 Testing the setting speed after 2.5 min setting time

In a manner similar to the procedure for testing the bond strength, pairs of oak panels each 5 mm thick, 20 mm wide and 150 mm long were bonded using the respective adhesive dispersions, with a pressure distributed uniformly over the bond area. The bond area was 20 mm * 20 mm. Bond strength was determined in the tensile shear test after 2.5 minutes, where after the bonded test specimens were pulled apart using a tensile testing machine at a pulling speed of 50 mm/min and were stressed until they broke. On fracture, the maximum force Fₘₐₓ which occurred at that point was determined, and was used in turn to determine the bond strength at setting time t by T_{τ} = Fₘₐₓ/A, where A is the bonded test area. Results are given in N/mm².

Performance requirement for a D4 type water resistant wood glue is to achieve bond strength after 2.5 min of at least T(2.5) ≥ 1 N/mm².

### 1.6 Water resistance in accordance with DIN EN 204/205

Test specimens were produced in accordance with DIN EN 205. For this purpose pairs of beech wood panels, each 5 mm thick, 130 mm wide and 600 mm long, were bonded to one another with the adhesive formulation to be tested under a pressure distributed uniformly over the bond area and were stored in accordance with DIN EN 204. Following storage, the bonded panels were divided into test specimens each measuring 150 mm in length, and these test specimens were used to determine the bond strength in the tensile shear test. In this test the bonded specimens were pulled apart using a tensile testing machine at a pulling rate of 50 mm/min and were stressed until they broke. On fracture, the maximum force F*ₘₐₓ* which occurred at that point was determined. The bond strength T is calculated in accordance with DIN EN 205 from T = F*ₘₐₓ*/A, where A is the bonded test area. Results are given in N/mm². For testing of allocation to performance group D3 serial number 3 according to DIN EN204, named as D3/3, the specimens, after gluing, were stored under standard climatic conditions (23 °C, 50 % atmospheric humidity) for 7 days and then stored in cold water at 20 °C for 4 days.

For testing of allocation to performance group D4 serial number 5 according to DIN EN204, named as D4/5, the specimens, after gluing, were stored under standard climatic conditions (23 °C, 50 % atmospheric humidity) for 7 days and then stored in boiling water for 6 hours followed by storing in cold water at 20 °C for 2 hours.

Allocation to performance group D3 requires to achieve a value of D3/3 ≥ 2.0 N/mm². Allocation to performance group D4 requires to achieve a value of D3/3 ≥ 4.0 N/mm² and a value of D4/5 of ≥ 4.0 N/mm².

### 1.7 Heat resistance according to WATT 91 test method DIN EN 14257

As test specimens, pairs of beech wood panels each 5 mm thick, 125 mm wide and 325 mm long were bonded to one another using the respective adhesive dispersion, under a pressure distributed uniformly over the bond area. Following storage, the bonded panels were divided into test specimens each measuring 150 mm in length and 20 mm in width. After the test specimens had been prepared they were stored at a temperature of 80 °C in an oven preheated to 80 °C. Directly following hot storage, the thermal stability was determined in the tensile shear test on the lines of DIN EN 205, in which the bonded test specimens were pulled apart using a tensile testing machine at a pulling speed of 50 mm/min and were stressed until they broke. On fracture, the maximum force F*ₘₐₓ* which occurred at that point was determined. The cohesion or thermal stability τ is calculated from τ = F*ₘₐₓ*/A, where A is the bonded test area. Results are given as WATT in N/mm².
It is desired to achieve heat resistance as a bond strength WATT ≥ 6 N/mm².

### 1.8 Resistance to sustained load according to test method BS 3544 paragraph 2, 1962: Creep Resistance

"Resistance to sustained load according to test method BS 3544 paragraph 2" will be referred to as "Creep resistance" throughout the present specification.
Test pieces were prepared as described in detail in BS3544 Appendix A. In principle each test piece was made from three slips of beech 114 mm long, 25 mm wide and 3,2 mm thick, joined together with the adhesive dispersion to be tested so as to produce a 12,5 mm overlap joint (BS 3544, Fig. 6). After preparation the test pieces were conditioned at a temperature of 25 ± 1 °C and 65 ± 2% relative humidity for at least 7 days. To carry out the "Test for resistance to sustained load" a special jig, as shown in Fig. 2 in BS3644, was used. With this type of jig up to 12 test pieces may be tested with one set of weights. The test pieces were supported by means of small packing pieces between the frames of the jigs. The jig and the test pieces were placed in a conditioning atmosphere of a temperature of 25 ± 1°C and 65 ± 2% relative humidity. The top frame of the jig was supported by a metal frame (height about 2 m) and a load of 46 kg was applied to the bottom frame.
A group of five test pieces for each adhesive was tested. One day (24 hours) after application of the load the test pieces which resisted to the load are registered. This was repeated each day up to seven days. After seven days the test was finished. For each day a test piece did not fail one point was granted. This means e.g. that if all test pieces fail during the first day the result is "zero points", being the lowest result possible. If 5 test pieces pass 1 day and 3 two days and after three days all failed the result is 5 X 1 + 3 X 1 = 8 points. Best possible result is 5 X 7= 35 points if the five test pieces resist during the whole test time of seven days.
The test procedure was executed with a load of 46 kg, named as Creep 46.

It is desired to achieve Creep 46 = 35.

### 1.9 Test of Hardwood Adhesion (HWA)

The test was made with beech wood as a typical hardwood often used e.g. for making of furniture.
Logs of beech wood with a length of 5 cm are cut from a beech wood slat having a width of 5 cm and a thickness of 2.5 cm. These logs had two ends with an end grain surface. Ten of these logs were glued with an end grain surface to the planed surface of ten different beech wood slats, the slats having a width of 5 cm, a length of 40 cm and a thickness of 2.5 cm. To glue a log the adhesive was applied to an end grain surface with a spatula or a brush with an average thickness of 0.6 to I mm. Directly after application of the adhesive the log was glued by hand to the planed surface of a slat. This was made by slightly pressing and rubbing until the log adhered and excessive adhesive was pressed out from the glue line. The logs were glued to the broad side of the slat in such a manner that their long side was parallel to the long side of the slat. The glued specimens were stored for drying at 23°C and 50 % relative humidity for at least 7 days.
After drying each slat was fixed with screw clamps to a workbench in such a manner that the glued log faced upwards. With a hammer the log was knocked off the slat in long direction. The percentage of the glue line surface showing fiber tear at the slat surface was evaluated visually. The average fiber tear of the ten test specimens is given as HWA in % of fiber tear.

It is desired to achieve HWA of at least 20 %.

### 2. Polymerization Procedures

Examples given below were executed in a 3 1 glass reactor, equipped with electronic temperature measurement and control, reflux condenser, and metering pumps for at least four different feeds for parallel feeding, using an anchor-type stirrer at 200 RPM. A nitrogen flow was applied for 15 minutes for the initially charged PVOH solution.
The ingredients of the recipe were distributed among initial reactor charge, feed 1, feed 2 (if applied), feed 3, feed 4, and feed 5 and 6, if applied. The amount of the ingredients was chosen to give a final latex of 1800 to 2500 grams. The initial reactor charge was heated and feed 1 (and 2, if used) were started at approximately 50 °C to initiate the reaction. Feeds 3 and 4, were started about 20 min after initiation, they were metered in over a time of 60 to 180 minutes. Reaction temperature was maintained above 70 °C, preferably between 75 and 85°C during the addition of feeds 3 and 4. It was raised to 90 °C for the last hour where the remaining feed 1 (and 2, if used) were added completely, after feeds 3 and 4 were finished.
The free monomer content based on actual amount of latex after the start of feeds 3 and 4 could be controlled by appropriate addition rates for feeds 1, 2, 3, and 4 to be between 2 to 15 wt.%, if necessary. Feed 5 and 6 were added for post polymerization after feeds 1 and 2 had been completed. After post polymerization the product was cooled to ambient temperature under stirring at 100 rpm and application of a vacuum.

### 3. Characterization of applied S-PVOH and E-PVOH

Table 1 summarizes the properties of S-PVOH and E-PVOH grades used. Ethylene content and residual acetate groups, or respectively degree of hydrolysis, and were estimated using NMR analysis. The molecular weight is characterized by the viscosity of a 4 wt.% solution, measured at 23 oC.

**Table 1: Characterization of used S-PVOH and E-PVOH grades**

| Grade | Ethylene content | Hydrolysis | 4% Solution viscosity |
|---|---|---|---|
| | Mol% | Mol% | mPas |
| A | 0 | 98.2 | 6 |
| B | 0 | 98.6 | 29 |
| C | 0 | 98.4 | 30 |
| D | 5.4 | 99.2 | 14 |
| E | 3.2 | 98.1 | 26 |
| F | 0 | 92.1 | 17 |
| G | 0 | 91.4 | 58 |
| H | 0 | 87.5 | 50 |
| I | 0 | 86.8 | 5.7 |

Table 2 summarizes the aqueous polyvinyl alcohol solutions used for polymerization. Solutions have been prepared as known in the art. Their solids content was adjusted as desired to 10.0 ± 0.2 wt.% or 11.0 ± 0.2 wt.%.

**Table 2: Polyvinyl alcohol solutions prepared from PVOH grades in Table 1**

| Solution | wt. fraction of grade I | wt. fraction of grade II | wt. fraction of grade III | wt. fraction of grade IV |
|---|---|---|---|---|
| 1 | 25 A | 25 C | 25 D | 25 E |
| 2 | 50 B | 50 D | | |
| 3 | 70 C | 30D | | |
| 4 | 35 F | 40 G | 25 H | |
| 5 | 10 l | 45 G | 45 H | |

### Example 1

The initial reactor charge comprised 230 grams of water, 800 grams of PVOH solution 1 which had a concentration of 11 wt.%; and 8.5 grams of a 20 wt.% tartaric acid; and 50 grams of vinyl acetate. The initial pH value was adjusted to pH of 4 by an aqueous solution of sodium hydroxide. Feed 1 contained 80 grams of aqueous solution with an amount of 0.14 wt.% of hydrogen peroxide based on total monomer. Feed 3 consisted of 880.3 grams of vinyl acetate and of 155.4 grams of VeoVa®9, and feed 4 contained 107.7 grams of water, 33 grams of a 30 wt.% aqueous solution of acrylamide, 9.2 grams of a 48 wt.% aqueous solution of N-methylol acrylamide, and 0.1 grams of mercapto propionic acid. Feed 5 and feed 6 consisted of 4 grams aqueous solution containing 10 wt.% of t-butyl hydroperoxide, and of 4 grams of aqueous solution containing 10 wt.% of sodium erythorbate, respectively.
The final pH after polymerization was 5.2.
The final aqueous dispersion (sample 1.0) was analyzed regarding solids, viscosity Bf20, shear thinning factor SF, particle size x_{3,50}, and Grit 40; results are given in Table 3. Additionally, Table 3 contains results of the viscosity stability tests of the aqueous dispersion.
Part of the aqueous dispersion was formulated with 2 parts of propylene carbonate (sample 1.1). Another part of the aqueous dispersions was formulated with 2 parts of propylene carbonate and 5 parts of a 50 wt.% aqueous solution of aluminum chloride per 100 parts per weight of aqueous emulsion (sample 1.2).
The adhesive properties of samples 1.1 and 1.2 regarding setting speed T(2.5), water resistance D3 and D4, heat resistance WATT, Hard Wood Adhesion HWA, and Creep 46 were determined.
Some adhesive properties tests were repeated with sample 1.2 after 3 months and after 9 months. Even after 9 months - after slightly stirring - sample 1.2 was easily processible. The formulated sample 1.2 was characterized also regarding viscosity stability; results are given in Table 4. Results of application tests are included in Table 5.

### Example 2

Same as Example 1, but twice the amount of N-methylol acrylamide was used within feed 4 wherein the amount of water was adjusted not to change the total amount of feed 4.
The final pH after polymerization was 5.3.

The final aqueous dispersion (sample 2.0) was analyzed regarding solids, viscosity Bf20, shear thinning factor SF, particle size x_{3,50}, and Grit 40; results are given in Table 3. Additionally, Table 3 contains results of the viscosity stability tests of the aqueous dispersion.
Part of the aqueous dispersion was formulated with 2 parts of propylene carbonate (sample 2.1). Another part of the aqueous dispersions was formulated with 2 parts of propylene carbonate and 5 parts of a 50 wt.% aqueous solution of aluminum chloride per 100 parts per weight of aqueous emulsion (sample 2.2).
The adhesive properties of samples 2.1 and 2.2 regarding setting speed T(2.5), water resistance D3 and D4, heat resistance WATT, Hard Wood Adhesion HWA, and Creep 46 were determined.
Some adhesive properties tests were repeated with sample 2.2 after 3 months and after 9 months. Even after 9 months - after slightly stirring - sample 2.2. was easily processible. Formulated sample 2.2 was characterized also regarding viscosity stability; results are given in Table 4. All results of application tests are included in Table 5.

### Example 3 (Comparative Example)

The initial reactor charge comprised 200 grams of water, 1.6 grams of sodium acetate, 750 grams of PVOH solution 2 which had a concentration of 10 wt.%; and 8.5 grams of a 20 wt.% tartaric acid; and 100 grams of vinyl acetate. Feed 1 contained 80 grams of aqueous solution with an amount of 0.16 wt.% of hydrogen peroxide based on total monomer. Feed 3 consisted of 712 grams of vinyl acetate and of 180 grams of VeoVa®9, and feed 4 contained 83.3 grams of water, and 16.7 grams of a 48 wt.% aqueous solution of N-methylol acrylamide. No post polymerization was applied.
The final pH after polymerization was 4.6.

The final aqueous dispersion (sample 3.0) was analyzed regarding solids, viscosity Bf20, shear thinning factor SF, particle size X_{3,50}, and Grit 40; results are given in Table 3. Additionally, Table 3 contains results of the viscosity stability tests of the aqueous dispersion. The aqueous dispersion was formulated with 2.5 parts of propylene carbonate and 4 parts of a 50 wt.% aqueous solution of aluminum chloride per 100 parts per weight of aqueous emulsion (sample 3.2). The adhesive properties regarding setting speed T(2.5), water resistance D3 and D4, heat resistance WATT, Hard Wood Adhesion HWA, and Creep 46 were determined. Results are included in Table 5.

### Example 4 (Comparative Example)

The initial reactor charge comprised 1000 grams of PVOH solution 3 which had a concentration of 10 wt.%; and 8.5 grams of a 20 wt.% tartaric acid, and 100 grams of vinyl acetate. The initial pH value was adjusted to pH of 4.8 by an aqueous solution of sodium hydroxide. Feed 1 contained 75 grams of aqueous solution with an amount of 0.15 wt.% of hydrogen peroxide based on total monomer. Feed 3 consisted of 884 grams of vinyl acetate, and feed 4 contained 56.6 grams of water, 26.7 grams of a 30 wt.% aqueous solution of acrylamide and 16.7 grams of a 48 wt.% aqueous solution of N-methylol acrylamide. Feed 5 and feed 6 consisted of 2 grams aqueous solution containing 10 wt.% of t-butyl hydroperoxide, and of 2 grams of aqueous solution containing 10 wt.% of sodium erythorbate, respectively.
The final pH after polymerization was 5.2.
The final aqueous dispersion (sample 4.0) was analyzed regarding solids, viscosity Bf20, shear thinning factor SF, particle size X_{3,50}, and Grit 40; results are given in Table 3. Additionally, Table 3 contains results of the viscosity stability tests of the aqueous dispersion. Part of the aqueous dispersion was formulated with 2 parts of propylene carbonate and 5 parts of a 50 wt.% aqueous solution of aluminum chloride per 100 parts per weight of aqueous emulsion (sample 4.2). The adhesive properties regarding setting speed T(2.5), water resistance D3 and D4, heat resistance WATT, and Hard Wood Adhesion HWA were determined. Results are given in Table 5.

### Example 5

The initial reactor charge comprised 160 grams of water, 800 grams of PVOH solution 3 which had a concentration of 10 wt.%; and 8.5 grams of a 20 wt.% tartaric acid; and 100 grams of vinyl acetate. The initial pH value was adjusted to pH of 4.8 by an aqueous solution of sodium hydroxide. Feed 1 contained 75 grams of aqueous solution with an amount of 0.15 wt.% of hydrogen peroxide based on total monomer. Feed 3 consisted of 742 grams of vinyl acetate and of 150 grams of VeoVa®9, and feed 4 contained 78.4 grams of water, 13.3 grams of a 30 wt.% aqueous solution of acrylamide, 8.3 grams of a 48 wt.% aqueous solution of N-methylol acrylamide, and 0.09 grams of mercapto propionic acid. Feed 5 and feed 6 consisted of 2 grams aqueous solution containing 10 wt.% of t-butyl hydroperoxide, and of 2 grams of aqueous solution containing 10 wt.% of sodium erythorbate, respectively.
The final pH after polymerization was 5.2.
The final aqueous dispersion (sample 5.0) was analyzed regarding solids, viscosity Bf20, shear thinning factor SF, particle size x_{3,50}, and Grit 40; results are given in Table 3. Additionally, Table 3 contains results of the viscosity stability tests of the aqueous dispersion. Part of the aqueous dispersions was formulated with 2 parts of propylene carbonate and 5 parts of a 50 wt.% aqueous solution of aluminum chloride per 100 parts per weight of aqueous emulsion (sample 5.2).
The adhesive properties of sample 5.2 regarding setting speed T(2.5), water resistance D3 and D4, heat resistance WATT, Hard Wood Adhesion HWA, and Creep 46 were estimated. Formulated sample 5.2 was characterized also regarding viscosity stability; results are given in Table 4. All results of application tests are included in Table 5.

### Example 6

The initial reactor charge comprised 160 grams of water, 800 grams of PVOH solution 3 which had a concentration of 10 wt.%; and 8.5 grams of a 20 wt.% tartaric acid; and 100 grams of vinyl acetate. The initial pH value was adjusted to pH of 4.8 by an aqueous solution of sodium hydroxide. Feed 1 contained 75 grams of aqueous solution with an amount of 0.15 wt.% of hydrogen peroxide based on total monomer. Feed 3 consisted of 730 grams of vinyl acetate and of 150 grams of VeoVa®9, and feed 4 contained 43.3 grams of water, 40 grams of a 30 wt.% aqueous solution of acrylamide, 16.7 grams of a 48 wt.% aqueous solution of N-methylol acrylamide, and 0.09 grams of mercapto propionic acid. Feed 5 and feed 6 consisted of 2 grams aqueous solution containing 10 wt.% of t-butyl hydroperoxide, and of 2 grams of aqueous solution containing 10 wt.% of sodium erythorbate, respectively.
The final pH after polymerization was 5.1.
The final aqueous dispersion (sample 6.0) was analyzed regarding solids, viscosity Bf20, shear thinning factor SF, particle size x_{3,50}, and Grit 40; results are given in Table 3. Additionally, Table 3 contains results of the viscosity stability tests of the aqueous dispersion. Part of the aqueous dispersions was formulated with 2 parts of propylene carbonate and 5 parts of a 50 wt.% aqueous solution of aluminum chloride per 100 parts per weight of aqueous emulsion (sample 6.2).
The adhesive properties of sample 6.2 regarding setting speed T(2.5), water resistance D3 and D4, heat resistance WATT, Hard Wood Adhesion HWA, and Creep 46 were estimated. Formulated sample 6.2 was characterized also regarding viscosity stability; results are given in Table 4. All results of application tests are included in Table 5.

### Example 7 (Comparative Example)

The initial reactor charge comprised 119 grams of water, 718.8 grams of PVOH solution 4 which had a concentration of 10 wt.%; and 232.6 grams of vinyl acetate. The initial pH value was adjusted to pH of 5.8 by an aqueous solution of sodium hydroxide. 1 gram of a 1 wt.% aqueous solution of ferrous ammonium sulfate was added to initial charge. Feed 1 contained 54.5 grams of aqueous solution with an amount of 0.029 wt.% of t-butyl hydroperoxide based on total monomer; and Feed 2 contained 55.5 grams of aqueous solution with an amount of 0.045 wt.% of sodium formaldehyde sulfoxylate based on total monomer. Feed 3 consisted of 555 grams of vinyl acetate and of 138.8 grams of VeoVa®9, and feed 4 contained 45 grams of water, 12 grams of a 48 wt.% aqueous solution of N-methylol acrylamide, and 0.23 grams of mercapto propionic acid. Feed 5 and feed 6 consisted of 1.9 grams aqueous solution containing 10 wt.% of t-butyl hydroperoxide, and of 1.9 grams of aqueous solution containing 10 wt.% of sodium formaldehyde sulfoxylate, respectively.
The final pH after polymerization was 4.7.
The final aqueous dispersion (sample 7.0) was analyzed regarding solids, viscosity Bf20, shear thinning factor SF, particle size x_{3,50}, and Grit 40; results are given in Table 3. Additionally, Table 3 contains results of the viscosity stability tests of the aqueous dispersion. Part of the aqueous dispersions was formulated with 2.6 parts of butyl carbitol acetate and 2.5 parts of aluminum chloride salt per 100 parts per weight of aqueous emulsion (sample 7.2). The adhesive properties of sample 7.2 regarding setting speed T(2.5), water resistance D3 and D4, heat resistance WATT, Hard Wood Adhesion HWA, and Creep 46 were estimated. Formulated sample 7.2 was characterized also regarding viscosity stability; results are given in Table 4. All results of application tests are included in Table 5.

### Example 8 (Comparative Example)

The initial reactor charge comprised 47 grams of water, 798.8 grams of PVOH solution 5 which had a concentration of 10 wt.%; and 232.6 grams of vinyl acetate. The initial pH value was adjusted to pH of 5.8 by an aqueous solution of sodium hydroxide. 1 gram of a 1 wt.% aqueous solution of ferrous ammonium sulfate was added to initial charge. Feed 1 contained 75 grams of aqueous solution with an amount of 0.040 wt.% of t-butyl hydroperoxide based on total monomer; and Feed 2 contained 75 grams of aqueous solution with an amount of 0.055 wt.% of sodium formaldehyde sulfoxylate based on total monomer. Feed 3 consisted of 555 grams of vinyl acetate and of 138.8 grams of VeoVa®9, and feed 4 contained 164 grams of water, 48.3 grams of a 48 wt.% aqueous solution of N-methylol acrylamide. Feed 5 and feed 6 consisted of 10 grams aqueous solution containing 2 wt.% of t-butyl hydroperoxide, and of 10 grams of aqueous solution containing 2 wt.% of sodium formaldehyde sulfoxylate, respectively.
The final pH after polymerization was 4.8.
The final aqueous dispersion (sample 8.0) was analyzed regarding solids, viscosity Bf20, shear thinning factor SF, particle size x_{3,50}, and Grit 40; results are given in Table 3. Additionally, Table 3 contains results of the viscosity stability tests of the aqueous dispersion.
Part of the aqueous dispersions was formulated with 2.6 parts of butyl carbitol acetate and 5 parts of a 50 wt.% aqueous solution of aluminum chloride per weight of aqueous emulsion (sample 8.2).
The adhesive properties of sample 8.2 regarding setting speed T(2.5), water resistance D3 and D4, heat resistance WATT, Hard Wood Adhesion HWA, and Creep 46 were estimated. Formulated sample 8.2 was characterized also regarding viscosity stability; results are given in Table 4. All results of application tests are included in Table 5.

**Table 3: Analytical data obtained for the aqueous dispersions (n.d. not determined)**

| sample | solids | Bf 20 | SF | x3,50 | grit | RT score | 5 C score | 50 C score | irrev visco RT | irrev visco 5C | irrev visco 50 C |
|---|---|---|---|---|---|---|---|---|---|---|---|
| | wt% | mPas | | nm | ppm | | | | % | % | % |
| 1.0 | 51.1 | 14400 | 1.8 | 2590 | 145 | 1 | 1 | 1 | ±0 | ≈5 | ±0 |
| 2.0 | 51.2 | 10950 | 1.2 | 1 881 | 235 | 1 | 1 | 1 | ±0 | ≈5 | ±0 |
| 3.0 | 50.7 | 25 700 | 1.4 | 2440 | 166 | 4 | 4 | 3 | >40 | n.d. | n.d. |
| 4.0 | 50.7 | 16800 | 0.7 | 926 | 178 | 4 | 4 | 1 | > 25 | ≈15 | ≈ 5 |
| 5.0 | 50.5 | 10800 | 1.1 | 1550 | 145 | 1 | 2 | 1 | ± 0 | ≈10 | ±0 |
| 6.0 | 50.8 | 13480 | 1.2 | 1340 | 116 | 1 | 1 | 1 | ± 0 | ≈5 | ±0 |
| 7.0 | 51.6 | 11200 | 0.1 | 1 165 | 387 | 1 | 1 | 2 | >15 | n.d. | >25 |
| 8.0 | 47.6 | 14 550 | 0.3 | 815 | 584 | 3 | 2 | 4 | > 50 | n.d. | >200 |

**Table 4: Estimation of viscosity stability of adhesive formulations**

| sample | RT score | 50 C score | irrev visco RT | irrev visco 50 C |
|---|---|---|---|---|
| | | | % | % |
| 1.2 | 1 | 2 | ≈ 25 | ≈ 30 |
| 2.2 | 2 | 3 | ≈ 60 | ≈ 70 |
| 5.2 | 1 | 2 | ≈ 25 | ≈ 40 |
| 6.2 | 2 | 3 | ≈ 70 | ≈ 85 |
| 7.2 | 2 | 3 | ≈ 50 | ≈ 75 |
| 8.2 | 4 | 5 | > 200 | gelled |

**Table 5: Results of adhesive properties tests (n.d. not determined)**

| sample | time | T(2.5) | D3/3 | D4/5 | WATT | HWA | Creep 46 kg |
|---|---|---|---|---|---|---|---|
| | | N/mm² | N/mm² | N/mm² | N/mm² | % | |
| 1.1 | 1 week | 2.0 | 2.6 | 1.5 | 5.8 | 39 | 35 |
| 1.2 | 1 week | 1.5 | 5.9 | 4.1 | 6.4 | 42 | 35 |
| 1.2 | 3 months | 1.4 | 6.1 | 4.4 | 6.6 | n.d. | n.d. |
| 1.2 | 9 months | 1.5 | 5.7 | 4.1 | 6.1 | n.d. | n.d. |
| 2.1 | 1 week | 1.7 | 3.0 | 1.7 | 6.5 | 41 | 35 |
| 2.2 | 1 week | 1.6 | 6.2 | 4.2 | 7.2 | 38 | 35 |
| 2.2 | 3 months | 1.5 | 5.6 | 4.2 | 8.1 | n.d. | n.d. |
| 2.2 | 9 months | 1.6 | 6.5 | 4.1 | 7.6 | n.d. | n.d. |
| 3.2 | 1 week | 0.6 | 6.2 | 4.9 | 5.3 | 10 | 35 |
| 4.2 | 1 week | 2.1 | 2.7 | 1.5 | 7.9 | 31 | n.d. |
| 5.2 | 1 week | 2.3 | 5.4 | 4.1 | 6.3 | 28 | 35 |
| 6.2 | 1 week | 1.9 | 5.6 | 4.2 | 6.7 | 34 | 35 |
| 7.2 | 1 week | 2.0 | 3.8 | 3.0 | 6.3 | n.d. | n.d. |
| 8.2 | 1 week | 2.3 | 6.5 | 4.3 | 6.8 | n.d. | n.d. |

Example 1 - from which samples 1.0, 1.1, and 1.2 were obtained - and Example 2 - from which samples 2.0, 2.1, and 2.2. were obtained - provide not only excellent viscosity stability, even for the formulations 1.2 and 2.2 including the acidic catalyst which were processible still after 9 months, also provide excellent adhesive performance: The un-catalyzed samples 1.1 and 2.1 already provide a D3 type wood glue with good heat resistance and high hard wood adhesion. The catalyzed samples 1.2 and 2.2 provide D4 type water resistance fulfilling the demands for high heat resistance, hard wood adhesion and creep resistance. Adhesive properties remain unchanged even after storing the adhesive formulation up to 9 months.

Comparative example 3 (samples 3.0 and 3.2), not including acrylamide, still provides excellent water resistance, but setting speed and hard wood adhesion are much too low. Heat resistance of sample 3.2 was lower compared to the catalyzed formulations of examples 1.2 and 2.2; e.g. sample 3.2. without acrylamide does not meet the requirements of WATT 91 > 6 N/mm². Additionally, viscosity stability of the aqueous emulsion 3 was not sufficient. Comparative Example 4 (samples 4.0 and 4.2), not including the second vinyl ester monomer (a2), in addition to vinyl acetate, only provided D3 type water resistance but no D4 type water resistance. Moreover, viscosity stability of the aqueous emulsion was not sufficient which indicates the surprising finding that the introduction of the vinylester (a1) improves viscosity stability upon storage.

Examples 5 and 6 - from which samples 5.0, 5.2, 6.0 and 6.2 were obtained - again provided good viscosity stability and also possess excellent adhesive performance: The catalyzed samples 5.2 and 6.2 provided D4 type water resistance fulfilling the demands for high heat resistance, sufficient hard wood adhesion and good creep resistance. These samples also showed good viscosity stability.

For comparative Examples 7 and 8 the applied S-PVOH grades had a degree of hydrolysis below 95 Mol%. If low amounts of NMA are used as for comparative Example 7 (about 0.6 wt.% NMA based on total monomer) then viscosity stability was good but D4 water resistance could not be obtained (Sample 7.2). If higher amounts of NMA were used as for comparative Example 8 (about 2.4 wt.% NMA based on total monomer) then excellent water and heat resistance could be obtained, but the viscosity stability decreased. Such product is not applicable as an one component D4 wood glue (D4/1C system).

## Claims

1. Aqueous polymer dispersion obtainable by emulsion copolymerization of vinyl ester monomers (a) in the presence of fully hydrolyzed polyvinyl alcohol (PVOH) (c), using comonomers (b),
wherein the vinyl ester monomers (a) comprise a first component (a1) of versatic acid ester(s) and a second component (a2) of vinyl acetate,
wherein the comonomer(s) (b) comprise
a (meth)acryl amide derivative (b1) of the general formula CH₂ = CX - CO - NHY,
wherein X is hydrogen or a methyl group, Y is the group - (CH₂)ₙ - O- Z, wherein n is an integer in the range of 1 to 6, and Z is hydrogen or an alkyl or acyl group having up to 4 carbon atoms,
and a (meth)acryl amide derivative (b2), different from (b1), of the general formula CH₂ = CX-CO-NHY,
wherein X is hydrogen or a methyl group, Y is hydrogen or the group - (CH₂)ₙ - O - Z, wherein n is an integer in the range of 1 to 6, and Z is an alkyl or acyl group having up to 4 carbon atoms,
wherein the fully hydrolyzed polyvinyl alcohol (PVOH) (c) comprises a blend of fully hydrolyzed Standard-PVOH (S-PVOH) having an average degree of hydrolysis above 95 mol% and of fully hydrolyzed modified PVOH (X-PVOH) having an average degree of hydrolysis in the range of above 95 mol%;
wherein the polymer dispersion comprises up to 3.0 wt.-% of co-monomers (b), based on total monomers.

2. Aqueous polymer dispersion according to claim 1, comprising up to 99.5 wt.%, preferably 95.0 to 99.4 wt.% of vinyl ester monomers (a), based on total monomers, in particular comprising 0.5 to 25 wt.%, preferred 5 to 20 wt.%, even more preferred 8 to 16 wt.% based on total monomers, of component (a1), wherein component (a1) is preferably an ester of a versatic acid having 9 to 11 C atoms, more preferred having 9 or 10 C atoms.

3. Aqueous polymer dispersion according to claim 1 or 2, comprising 0.6 to 3.0 wt.% of co-monomers (b), based on total monomers, in particular comprising 0.2 to less than 1.00 wt.%, based on total monomers, of co-monomer (b1).

4. Aqueous polymer dispersion according to any one of claims 1 to 4, wherein comonomer (b2) comprises (meth)acrylamide, in particular acrylamide.

5. Aqueous polymer dispersion according to any one of claims 1 to 3, wherein comonomer (b1) comprises N-methylol acrylamide (NMA).

6. Aqueous polymer dispersion according to any one of claims 1 to 5, wherein no partially hydrolyzed PVOH is present having an average degree of hydrolysis up to 95 mol%, and/or wherein no partially hydrolyzed X-PVOH is present having an average degree of hydrolysis up to 98.00 mol%.

7. Aqueous polymer dispersion according to any one of claims 1 to 6, wherein the fully hydrolyzed polyvinyl alcohol (PVOH) (c) is present in an amount of 4 to 10 wt.%, preferably 6 to 9 wt.%, based on total monomers.

8. Aqueous polymer dispersion according to any one of claims 1 to 7, wherein the X-PVOH comprises ethylene modified PVOH (E-PVOH), wherein the ethylene content is preferably within the range of 2 to 9 mol%.

9. Aqueous polymer dispersion according to any one of claims 1 to 8, wherein the S-PVOH has an average degree of hydrolysis in the range of 95.1 to 99.96 mol% and/or wherein the X-PVOH has an average degree of hydrolysis in the range of 98.04 to 99.96, in particular 98.1 to 99.6 mol%.

10. Aqueous polymer dispersion according to any one of claims 1 to 9, further comprising up to 2 wt.%, in particular 0.1 to 1.5 wt.% based on total monomers, of a surfactant or emulsifier.

11. Aqueous polymer dispersion according to any one of claims 1 to 10, wherein the aqueous polymer dispersion has a solids content within the range of from 40 to 60 wt.%, preferably in the range of from 45 to 55 wt.%.

12. Adhesive formulation comprising the aqueous polymer dispersion according to any one of claims 1 to 11, further comprising per 100 parts per weight (ppw) of the aqueous polymer dispersion one or more of the following ingredients:
up to 5 ppw, preferably 1 to 4 ppw of a coalescing agent (d), and/or
0.05 to 5 ppw, preferably 0.5 to 4.0, in particular 1.5 to 3.5 ppw of an acidic catalyst (e), and/or
up to 6 ppw, preferably 1 to 4 of post polymerization added PVOH (f), different from PVOH (c), and/or
up to 5 ppw, preferably 1 to 3 of a viscosity modifier (g), and/or
up to 10 ppw, preferably 2 to 6 of urea (h).

13. Adhesive formulation according to claim 12, wherein the acidic catalyst (e) is a water soluble metal salt, preferably selected from the group consisting of aluminium chloride, aluminium nitrate, aluminium sulfate, or is para-toluene sulfonic acid.

14. Use of the aqueous polymer dispersion according to any one of claims 1 to 11 to provide to an adhesive formulation a water resistance, measured as a D3/3 value and D4/5 value of a wood bond according to DIN EN 204/205 of at least 4 N/mm² each and/or
to provide to an adhesive formulation a heat resistance measured as WATT 91 value of a wood bond according to DIN EN 14257 of at least 6 N/mm² and/or
to provide to an adhesive formulation a long term processibility or workability of at least 3 months.

15. Use of the aqueous polymer dispersion according to any one of claims 1 to 11 or of the adhesive formulation according to claim 12 or 13 in one or more of the following applications:
a) as adhesive for wood working or as wood glue,
b) as adhesive for paper and packaging, in particular for case sealing, book binding, bag making, card board lamination
c) as parquet adhesive,
d) in binders for carpets,
e) in binders used for wood fiber boards, leather fiber material, glass and mineral fiber materials,
f) in binders for isolation materials made from paper- plastic-, glass-, or mineral fibers,
g) in binders for cement and plaster,
h) in binders for textile and nonwovens or in textile finish.

16. Process of making an aqueous polymer dispersion according to any one of claims 1 to 11, comprising emulsion copolymerization of vinyl ester monomers (a) in the presence of fully hydrolyzed polyvinyl alcohol (PVOH) (c), using comonomers (b),
wherein the vinyl ester monomers (a) comprise a first component (a1) of versatic acid ester(s) and a second component (a2) of vinyl acetate,
wherein the comonomer(s) (b) comprise N-alkylol acrylamide (b1) and (meth)acryl amide (b2),
wherein the fully hydrolyzed polyvinyl alcohol (PVOH) (c) comprises a blend of fully hydrolyzed Standard-PVOH (S-PVOH) having an average degree of hydrolysis above 95 wt% and of fully hydrolyzed modified PVOH (X-PVOH) having an average degree of hydrolysis above 95 mol%, preferably in the range of 98.04 mol% to 99.96 mol%,
wherein the polymerization is optionally performed in the presence of one or more oxidizing agent(s) (i) such as selected from the group consisting of peroxides, and/or
one or more reducing agent(s) (j) such as selected from the group consisting of tartaric acid, ascorbic acid, formic acid, sodium erythorbate, or mixtures thereof.

17. Process according to claim 16, comprising the process steps (P1) start of the initiation, (P2) monomer delay and (P3) completion of conversion, wherein
(P1) polymerization is started at a pH in the range of 2 to 8, preferably in the range of 3 to 6, preferably at a temperature less than 60 °C,
(P2) the polymerization is continued by
1) at least one monomer delay, wherein monomer(s) (a) and/or (b) is/are delayed, preferably the conversion of initially charged monomer(s) is at least 50 %, preferably at least 80 % before the delayed monomer(s) are started,
2) optionally by a delay of PVOH (c),
(P3) the polymerization is finished by delayed addition of oxidizer and/or reducing agent(s),
(P4) the residual monomer is converted by a post polymerization step, adding a different oxidizer, such as t-butyl hydroperoxide, and a different reducing agent.

18. Process according to claims 16 or 17 wherein hydrogen peroxide is used as oxidizer which is added continuously - avoiding any initial shot - during the process steps (P1) to (P3).

19. Process according to claims 16 to 18 wherein less than 25 wt.%, preferred less than 15 wt.% of the monomers based on total monomers are initially charged to the reactor before starting process step (P1), and wherein the initially charged monomers contain only the vinyl ester monomers (a), preferably only monomer component (a2), whereas the total amount of monomers (b) is delayed.

## Patentansprüche

1. Wässrige Polymerdispersion, die durch Emulsionscopolymerisation von Vinylestermonomeren (a) in Gegenwart von vollständig hydrolysiertem Polyvinylalkohol (PVOH) (c) unter Verwendung von Comonomeren (b) erhältlich ist,
wobei die Vinylestermonomere (a) eine erste Komponente (a1) von Versatinsäureester(n) und eine zweite Komponente (a2) von Vinylacetat umfassen,
wobei das (die) Comonomer(e) (b) folgendes umfassen:
ein (Meth)acrylamidderivat (b1) der allgemeinen Formel CH₂=CX-CO-NHY,
wobei X Wasserstoff oder eine Methylgruppe ist, Y die Gruppe -(CH₂)ₙ-O-Z ist, wobei n eine ganze Zahl im Bereich von 1 bis 6 ist, und Z Wasserstoff oder eine Alkyl- oder Acylgruppe mit bis zu 4 Kohlenstoffatomen ist,
und ein von (b1) verschiedenes (Meth)acrylamidderivat (b2) der allgemeinen Formel CH₂=CX-CO-NHY,
wobei X Wasserstoff oder eine Methylgruppe ist, Y Wasserstoff oder die Gruppe -(CH₂)ₙ-O-Z ist, wobei n eine ganze Zahl im Bereich von 1 bis 6 ist, und Z eine Alkyl- oder Acylgruppe mit bis zu 4 Kohlenstoffatomen ist,
wobei der vollständig hydrolysierte Polyvinylalkohol (PVOH) (c) eine Mischung von vollständig hydrolysiertem Standard-(PVOH) (S-PVOH) mit einem durchschnittlichen Hydrolysegrad von über 95 Mol-% und von vollständig hydrolysiertem modifiziertem PVOH (X-PVOH) mit einem durchschnittlichen Hydrolysegrad im Bereich oberhalb von 95 Mol-% umfasst;
wobei die Polymerdispersion bis zu 3,0 Gew.-% von Comonomeren (b), bezogen auf Monomere insgesamt, umfasst.

2. Wässrige Polymerdispersion nach Anspruch 1, umfassend bis zu 99,5 Gew.-%, vorzugsweise 95,0 bis 99,4 Gew.-% von Vinylester-Monomeren (a), bezogen auf Monomere insgesamt, insbesondere umfassend 0,5 bis 25 Gew.-%, bevorzugt 5 bis 20 Gew.-%, noch stärker bevorzugt 8 bis 16 Gew.-%, bezogen auf Monomere insgesamt, von Komponente (a1), wobei Komponente (a1) vorzugsweise ein Ester von einer Versatinsäure mit 9 bis 11 C-Atomen, stärker bevorzugt mit 9 bis 10 C-Atomen ist.

3. Wässrige Polymerdispersion nach Anspruch 1 oder 2, umfassend 0,6 bis 3,0 Gew.-% von Comonomer(en) (b), bezogen auf Monomere insgesamt, insbesondere umfassend 0,2 bis weniger als 1,00 Gew.-%, bezogen auf Monomere insgesamt, von Comonomer (b1).

4. Wässrige Polymerdispersion nach einem der Ansprüche 1 bis 4, wobei Comonomer (b2) (Meth)acrylamid, insbesondere Acrylamid umfasst.

5. Wässrige Polymerdispersion nach einem der Ansprüche 1 bis 3, wobei Comonomer (b1) N-Methylolacrylamid (NMA) umfasst.

6. Wässrige Polymerdispersion nach einem der Ansprüche 1 bis 5, wobei kein teilweise hydrolysierter PVOH mit einem durchschnittlichen Hydrolysegrad von bis zu 95 Mol-% vorhanden ist, und/oder wobei kein teilweise hydrolysierter X-PVOH mit einem durchschnittlichen Hydrolysegrad von bis zu 98,00 Mol-% vorhanden ist.

7. Wässrige Polymerdispersion nach einem der Ansprüche 1 bis 6, wobei der vollständig hydrolysierte Polyvinylalkohol (PVOH) (c) in einer Menge von 4 bis 10 Gew.-%, vorzugsweise von 6 bis 9 Gew.-%, bezogen auf Monomere insgesamt, vorhanden ist.

8. Wässrige Polymerdispersion nach einem der Ansprüche 1 bis 7, wobei der X-PVOH Ethylen-modifizierten PVOH (E-PVOH) umfasst, wobei der Ethylengehalt vorzugsweise im Bereich von 2 bis 9 Mol-% liegt.

9. Wässrige Polymerdispersion nach einem der Ansprüche 1 bis 8, wobei der S-PVOH einen durchschnittlichen Hydrolysegrad im Bereich von 95,1 bis 99,96 Mol-% aufweist und/oder wobei der X-PVOH einen durchschnittlichen Hydrolysegrad im Bereich von 98,04 bis 99,96, insbesondere von 98,1 bis 99,6 Mol-% aufweist.

10. Wässrige Polymerdispersion nach einem der Ansprüche 1 bis 9, weiterhin umfassend bis zu 2 Gew.-%, insbesondere 0,1 bis 1,5 Gew.-%, bezogen auf Monomere insgesamt, eines grenzflächenaktiven Mittels oder eines Emulgators.

11. Wässrige Polymerdispersion nach einem der Ansprüche 1 bis 10, wobei die wässrige Polymerdispersion einen Feststoffgehalt im Bereich von 40 bis 60 Gew.-%, vorzugsweise von 45 bis 55 Gew.-% aufweist.

12. Klebstofformulierung umfassend die wässrige Polymerdispersion nach einem der Ansprüche 1 bis 11, weiterhin umfassend auf 100 Gewichtsteile (ppw) der wässrigen Polymerdispersion einen oder mehrere der folgenden Bestandteile:
bis zu 5 ppw, vorzugsweise 1 bis 4 ppw einem koaleszierenden Mittels (d), und/oder 0,05 bis 5 ppw, vorzugsweise 0,5 bis 4,0, insbesondere 1,5 bis 3,5 ppw eines sauren Katalysators (e),
und/oder
bis zu 6 ppw, vorzugsweise 1 bis 4 ppw nach der Polymerisation zugesetzten PVOHs (f), der von PVOH (c) verschieden ist, und/oder
bis zu 5, vorzugsweise 1 bis 3 eines Viskositätsmodifizierers (g), und/oder bis zu 10, vorzugsweise 2 bis 6 ppw an Harnstoff (h).

13. Klebstoffformulierung nach Anspruch 12, wobei der saure Katalysator (e) ein wasserlösliches Metallsalz ist, das vorzugsweise aus der Gruppe ausgewählt ist, bestehend aus Aluminiumchlorid, Aluminiumnitrat, Aluminiumsulfat, oder Paratoluolsulfonsäure ist.

14. Verwendung der wässrigen Polymerdispersion nach einem der Ansprüche 1 bis 11 zur Bereitstellung einer Klebstofformulierung mit einer Wasserbeständigkeit, gemessen als D3/3-Wert und D4/5-Wert einer Holzklebung gemäß DIN EN 204/205, von mindestens jeweils 4 N/mm² und/oder zur Bereitstellung einer Klebstofformulierung mit einer Wärmebeständigkeit, gemessen als WATT 91-Wert einer Holzklebung gemäß DIN EN 14257, von mindestens 6 N/mm² und/oder
zur Bereitstellung einer Klebstofformulierung einer Langzeitverbarbeitbarkeit- oder -bearbeitbarkeit von mindestens 3 Monaten.

15. Verwendung der wässrigen Polymerdispersion nach einem nach einem der Ansprüche 1 bis 11 oder der Klebstofformulierung nach Anspruch 12 oder 13 bei einer oder mehreren der folgenden Anwendungen:
a) als Klebstoff zur Holzverarbeitung oder als Holzklebstoff,
b) als Klebstoff für Papier und Verpackung, insbesondere zum Kistenverschließen, Buchbinden, Tütenherstellen, Laminieren von Pappe,
c) als Parkettklebstoff,
d) in Bindemitteln für Teppiche
e) in Bindemitteln, die für Holzfaserbretter, Lederfasermaterial, Glas- und Mineralfasermaterialien verwendet werden,
f) in Bindemitteln für Isoliermaterialien, die aus Papier-, Kunststoff-, Glas- oder Mineralfasern hergestellt sind,
g) in Bindemitteln für Zement und Gips,
h) in Bindemitteln für Textilstoff und Vliese oder in Textilappretur.

16. Verfahren zur Herstellung einer wässrigen Polymerdispersion nach einem der Ansprüche 1 bis 11, umfassend die Emulsionscopolymerisation von Vinylestermonomeren (a) in Gegenwart von vollständig hydrolysiertem Polyvinylalkohol (PVOH) (c) unter Verwendung von Comonomeren (b),
wobei die Vinylestermonomere (a) eine erste Komponente (a1) von Versatinsäureester(n) und eine zweite Komponente (a2) von Vinylacetat umfassen,
wobei die Comonomere (b) N-Alkylolacrylamid (b1) und (Meth)acrylamid (b2) umfassen,
wobei der vollständig hydrolysierte Polyvinylalkohol (PVOH) (c) eine Mischung von vollständig hydrolysiertem Standard-PVOH (S-PVOH) mit einem durchschnittlichen Hydrolysegrad von über 95 Gew.-% und von vollständig hydrolysiertem modifiziertem PVOH (X-PVOH) mit einem durchschnittlichen Hydrolysegrad von über 95 Mol-%, vorzugsweise im Bereich von 98,04 Mol-% bis 99,96 Mol-% umfasst,
wobei die Polymerisation gegebenenfalls in Gegenwart von
einem oder mehreren Oxidationsmittel(n) (i), wie ausgewählt aus der Gruppe bestehend aus Peroxiden,
und/oder
einem oder mehreren Reduktionsmittel(n) (j), wie ausgewählt aus der Gruppe bestehend aus Weinsäure, Ascorbinsäure, Ameisensäure, Natriumerythorbat oder Gemischen davon, durchgeführt wird.

17. Verfahren nach Anspruch 16, umfassend die Verfahrensschritte (P1) Start der Initiierung, (P2) Monomerverzögerung und (P3) Beendigung der Umwandlung, wobei
(P1) die Polymerisation bei einem pH im Bereich von 2 bis 8, vorzugsweise im Bereich von 3 bis 6, vorzugsweise bei einer Temperatur von weniger als 60 °C gestartet wird,
(P2) die Polymerisation fortgeführt wird durch
1) mindestens eine Monomer-Verzögerung, wobei Monomer(e) (a) und/oder (b) verzögert wird/werden, die Umwandlung von zu Beginn vorgelegtem Monomer(en) vorzugsweise mindestens 50 %, vorzugsweise mindestens 80 % beträgt, bevor die verzögerten Monomer(e) gestartet werden,
2) gegebenenfalls durch eine Verzögerung von PVOH (c),
(P3) die Polymerisation durch verzögerte Zugabe von Oxidations- und/oder Reduktionsmittel(n) abgeschlossen wird,
(P4) das restliche Monomer durch einen nachträglichen Polymersationsschritt, Zugabe eines unterschiedlichen Oxidationsmittels, wie t-Butylhydroperoxid, und eines unterschiedlichen Reduktionsmittels umgewandelt wird.

18. Verfahren nach den Ansprüchen 16 oder 17, wobei Wasserstoffperoxid als Oxidationsmitttel verwendet wird, welches kontinuierlich - jede initiale Zugabe vermeidend - während der Verfahrensschritte (P1) bis (P3) zugesetzt wird.

19. Verfahren nach den Ansprüchen 16 bis 18, wobei weniger als 25 Gew.-%, bevorzugt weniger als 15 Gew.-% der Monomere, bezogen auf Monomere insgesamt, zu Beginn zu dem Reaktor zugesetzt werden, bevor der Verfahrensschritt (P1) gestartet wird, und wobei die zu Beginn vorgelegten Monomere nur die Vinylestermonomere (a), vorzugsweise nur die Monomerkomponente (a2) enthalten, wohingegen die Gesamtmenge von Monomeren (b) verzögert wird.

## Revendications

1. Dispersion aqueuse de polymère pouvant être obtenue par la copolymérisation en émulsion de monomères d'ester de vinyle (a) en présence d'un poly(alcool vinylique) (PVOH) totalement hydrolysé (c), en utilisant des co-monomères (b),
dans laquelle les monomères d'ester de vinyle (a) comprennent un premier composant (a1) d'ester(s) d'acide versatique et un second composant (a2) d'acétate de vinyle,
dans laquelle le ou les co-monomères (b) comprennent
un dérivé de (méth)acrylamide (b1) de formule générale CH₂=CX-CO-NHY,
dans laquelle X est un hydrogène ou un groupe méthyle, Y est le groupe -(CH₂)ₙ-O-Z, dans lequel n est un nombre entier situé dans la plage allant de 1 à 6, et Z est un hydrogène ou un groupe alkyle ou acyle contenant jusqu'à 4 atomes de carbone,
et un dérivé de (méth)acrylamide (b2), différent de (b1), de formule générale CH₂=CX-CO-NHY,
dans laquelle X est un hydrogène ou un groupe méthyle, Y est un hydrogène ou le groupe - (CH₂)ₙ-O-Z, dans lequel n est un nombre entier situé dans la plage allant de 1 à 6, et Z est un groupe alkyle ou acyle contenant jusqu'à 4 atomes de carbone,
dans laquelle le poly(alcool vinylique) (PVOH) totalement hydrolysé (c) comprend un mélange de PVOH standard totalement hydrolysé (S-PVOH) possédant un degré moyen d'hydrolyse supérieur à 95 % en mole et de PVOH modifié totalement hydrolysé (X-PVOH) possédant un degré moyen d'hydrolyse situé dans la plage au-dessus de 95 % en mole ;
dans laquelle la dispersion de polymère comprend jusqu'à 3,0 % en poids de co-monomères (b), sur la base des monomères totaux.

2. Dispersion aqueuse de polymère selon la revendication 1, comprenant jusqu'à 99,5 % en poids, de préférence 95,0 % en poids à 99,4 % en poids de monomères d'ester de vinyle (a), sur la base des monomères totaux, en particulier comprenant 0,5 % en poids à 25 % en poids, de préférence 5 % en poids à 20 % en poids, et de manière davantage préférée 8 % en poids à 16 % en poids, sur la base des monomères totaux, de composant (a1), le composant (a1) étant de préférence un ester d'un acide versatique contenant 9 à 11 atomes C, et de manière davantage préférée contenant 9 à 10 atomes C.

3. Dispersion aqueuse de polymère selon la revendication 1 ou 2, comprenant 0,6 % en poids à 3,0 % en poids de co-monomères (b), sur la base des monomères totaux, en particulier comprenant 0,2 % en poids à moins de 1,00 % en poids, sur la base des monomères totaux, de co-monomère (b1).

4. Dispersion aqueuse de polymère selon l'une quelconque des revendications 1 à 4, dans laquelle le co-monomère (b2) comprend du (méth)acrylamide, en particulier de l'acrylamide.

5. Dispersion aqueuse de polymère selon l'une quelconque des revendications 1 à 3, dans laquelle le co-monomère (b1) comprend du N-méthylol acrylamide (NMA).

6. Dispersion aqueuse de polymère selon l'une quelconque des revendications 1 à 5, dans laquelle aucun PVOH partiellement hydrolysé possédant un degré moyen d'hydrolyse allant jusqu'à 95 % en mole n'est présent et/ou dans laquelle aucun X-PVOH partiellement hydrolysé possédant un degré moyen d'hydrolyse allant jusqu'à 98,00 % en mole n'est présent.

7. Dispersion aqueuse de polymère selon l'une quelconque des revendications 1 à 6, dans laquelle le poly(alcool vinylique) (PVOH) totalement hydrolysé (c) est présent en une quantité allant de 4 % en poids à 10 % en poids, de préférence de 6 % en poids à 9 % en poids, sur la base des monomères totaux.

8. Dispersion aqueuse de polymère selon l'une quelconque des revendications 1 à 7, dans laquelle le X-PVOH comprend un PVOH modifié avec de l'éthylène (E-PVOH), la teneur en éthylène étant de préférence située dans la plage allant de 2 % en mole à 9 % en mole.

9. Dispersion aqueuse de polymère selon l'une quelconque des revendications 1 à 8, dans laquelle le S-PVOH possède un degré moyen d'hydrolyse situé dans la plage allant de 95,1 % en mole à 99,96 % en mole et/ou dans laquelle le X-PVOH possède un degré moyen d'hydrolyse situé dans la plage allant de 98,04 % en mole à 99,96 % en mole, en particulier de 98,1 % en mole à 99,6 % en mole.

10. Dispersion aqueuse de polymère selon l'une quelconque des revendications 1 à 9, comprenant en outre jusqu'à 2 % en poids, en particulier 0,1 % en poids à 1,5 % en poids, sur la base des monomères totaux, d'un tensioactif ou d'un émulsifiant.

11. Dispersion aqueuse de polymère selon l'une quelconque des revendications 1 à 10, dans laquelle la dispersion aqueuse de polymère présente une teneur en solides située dans la plage allant de 40 % en poids à 60 % en poids, de préférence dans la plage allant de 45 % en poids à 55 % en poids.

12. Formule d'adhésif comprenant la dispersion aqueuse de polymère selon l'une quelconque des revendications 1 à 11, comprenant en outre pour 100 parties en poids (ppw) de la dispersion aqueuse de polymère, un ou plusieurs des ingrédients suivants :
jusqu'à 5 ppw, de préférence 1 ppw à 4 ppw d'un agent de coalescence (d), et/ou 0,05 ppw à 5 ppw, de préférence 0,5 ppw à 4,0 ppw, en particulier 1,5 ppw à 3,5 ppw d'un catalyseur acide (e), et/ou
jusqu'à 6 ppw, de préférence 1 ppw à 4 ppw de PVOH (f) ajouté post-polymérisation, différent du PVOH (c), et/ou
jusqu'à 5 ppw, de préférence 1 ppw à 3 ppw d'un modificateur de viscosité (g), et/ou jusqu'à 10 ppw, de préférence 2 ppw à 6 ppw d'urée (h).

13. Formule d'adhésif selon la revendication 12, dans laquelle le catalyseur acide (e) est un sel de métal hydrosoluble, choisi de préférence dans le groupe constitué par le chlorure d'aluminium, le nitrate d'aluminium, le sulfate d'aluminium ou est l'acide para-toluène sulfonique.

14. Utilisation de la dispersion aqueuse de polymère selon l'une quelconque des revendications 1 à 11,
pour conférer une résistance à l'eau à une formule d'adhésif, mesurée par une valeur D3/3 et une valeur D4/5 d'un collage sur bois selon la norme DIN EN 204/205 d'au moins 4 N/mm² chacune et/ou
pour conférer une résistance à la chaleur à une formule d'adhésif mesurée par une valeur de WATT 91 d'un collage sur bois selon la norme DIN EN 14257 d'au moins 6 N/mm² et/ou pour conférer à une formule d'adhésif une aptitude au traitement ou au maniement de longue durée d'au moins 3 mois.

15. Utilisation de la dispersion aqueuse de polymère selon l'une quelconque des revendications 1 à 11 ou de la formule d'adhésif selon la revendication 12 ou 13 dans une ou plusieurs des applications suivantes :
a) comme adhésif pour le travail du bois ou comme colle à bois,
b) comme adhésif pour le papier et les emballages, en particulier pour coller les caisses en carton, pour la reliure des livres, pour la fabrication des sacs, pour la stratification du carton,
c) comme adhésif pour parquet,
d) dans les liants pour moquettes,
e) dans les liants utilisés pour les panneaux en fibres de bois, les matériaux en fibres de cuir, les matériaux en fibres de verre et minérales,
f) dans les liants pour les matériaux d'isolation préparés à partir de fibres de papier, de plastique, de verre ou minérales,
g) dans les liants pour le ciment et le plâtre,
h) dans les liants pour les textiles et les non-tissés ou dans les apprêts pour textiles.

16. Procédé de préparation d'une dispersion aqueuse de polymère selon l'une quelconque des revendications 1 à 11, comprenant la copolymérisation en émulsion de monomères d'ester de vinyle (a) en présence d'un poly(alcool vinylique) (PVOH) totalement hydrolysé (c), en utilisant des co-monomère (b),
dans lequel les monomères d'ester de vinyle (a) comprennent un premier composant (a1) d'ester(s) d'acide versatique et un second composant (a2) d'acétate de vinyle,
dans lequel le ou les co-monomères (b) comprennent un N-alkylol acrylamide (b1) et un (méth)acrylamide (b2),
dans lequel le poly(alcool vinylique) (PVOH) totalement hydrolysé (c) comprend un mélange de PVOH standard totalement hydrolysé (S-PVOH) possédant un degré moyen d'hydrolyse supérieur à 95 % en poids et de PVOH modifié totalement hydrolysé (X-PVOH) possédant un degré moyen d'hydrolyse supérieur à 95 % en mole, situé de préférence dans la plage allant de 98,04 % en mole à 99,96 % en mole,
dans lequel la polymérisation est effectuée facultativement en présence d'un ou de plusieurs agents oxydants (i) tels que choisis dans le groupe constitué par les peroxydes, et/ou
d'un ou de plusieurs agents réducteurs (j) tels que choisis dans le groupe constitué par l'acide tartrique, l'acide ascorbique, l'acide formique, l'érythorbate de sodium ou leurs mélanges.

17. Procédé selon la revendication 16, comprenant les étapes de procédé (P1) débuter l'initiation, (P2) différer les monomères et (P3) terminer la conversion, dans lequel
(P1) la polymérisation est débutée à un pH situé dans la plage allant de 2 à 8, de préférence dans la plage allant de 3 à 6, de préférence à une température inférieure à 60 °C,
(P2) la polymérisation est poursuivie par
1) au moins un retard de monomère, dans lequel le ou les monomères (a) et/ou (b) est/sont différé(s), de préférence la conversion du ou des monomère(s) initialement chargé(s) est d'au moins 50 %, de préférence d'au moins 80 % avant le début du ou des monomère(s) différé(s),
2) facultativement par un retard de PVOH (c),
(P3) la polymérisation est terminée par l'ajout différé d'un agent oxydant et/ou d'un agent réducteur,
(P4) le monomère résiduel est converti par une étape de post-polymérisation, en ajoutant un agent oxydant différent, comme le t-butyl hydroperoxyde, et un agent réducteur différent.

18. Procédé selon la revendication 16 ou 17, dans lequel du peroxyde d'hydrogène est utilisé comme agent oxydant qui est ajouté en continu - en évitant une décharge initiale-pendant les étapes de procédé (P1) à (P3).

19. Procédé selon les revendications 16 à 18, dans lequel moins de 25 % en poids, de préférence moins de 15 % en poids des monomères, sur la base des monomères totaux, sont initialement chargés dans le réacteur avant le début de l'étape de procédé (P1), et dans lequel les monomères initialement chargés contiennent seulement les monomères d'ester de vinyle (a), de préférence seulement le composant monomère (a2), tandis que la quantité totale des monomères (b) est différée.
